(19) Europäisches Patentamt
European Patent Office
Office européen des brevets

(11) EP 4 095 212 B1

(12) EUROPEAN PATENT SPECIFICATION

(45) Date of publication and mention of the grant of the patent:
**26.11.2025 Bulletin 2025/48**

(21) Application number: **22175173.8**

(22) Date of filing: **24.05.2022**

(51) International Patent Classification (IPC):
***C09J 7/10*** *(2018.01)* ***C09J 7/40*** *(2018.01)*

(52) Cooperative Patent Classification (CPC):
**C09J 7/10; C09J 7/40;** C09J 2301/302; C09J 2301/312

(54) **LAMINATE SHEET AND RELEASE FILM**

LAMINATFOLIE UND TRENNFOLIE

FEUILLE STRATIFIÉE ET FILM À LIBÉRATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.05.2021 JP 2021090486**

(43) Date of publication of application:
**30.11.2022 Bulletin 2022/48**

(73) Proprietor: **Nitto Denko Corporation**
**Ibaraki-shi, Osaka 567-8680 (JP)**

(72) Inventors:
- **SUZUKI, Tatsuya**
**Ibaraki-shi, 567-8680 (JP)**
- **OGAWA, Mayu**
**Ibaraki-shi, 567-8680 (JP)**

(74) Representative: **Müller-Boré & Partner Patentanwälte PartG mbB**
**Friedenheimer Brücke 21**
**80639 München (DE)**

(56) References cited:
**EP-A1- 3 521 395 EP-A1- 3 798 279**

- **TORAY FILMS: "DECOFIT(TM) | Technical Information | TORAY FILMS | TORAY", 15 September 2022 (2022-09-15), pages 1 - 4, XP55961444, Retrieved from the Internet <URL:https://www.films.toray/en/technical/decofit/>**
- **"Deflection Temperature Testing of Plastics", INTERNET CITATION, 1 January 1996 (1996-01-01), pages 1 - 2, XP002547243, Retrieved from the Internet <URL:http://www.matweb.com/reference/deflection-temperature.aspx> [retrieved on 20090924]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 095 212 B1

## Description

BACKGROUND OF THE INVENTION

1. Field of the Invention

The present invention relates to a release film and a laminate sheet comprising the release film.

2. Description of the Related Art

In general, pressure-sensitive adhesive (PSA) exists as a soft solid (a viscoelastic material) in a room temperature range and has a property to adhere easily to an adherend with some pressure applied. For such a property, PSA has been widely used in various industrial fields from home appliances to automobiles, OA equipment, and so on, typically in a form of a PSA sheet comprising a layer of the PSA.

In some applications, PSA sheets are applied to the non-flat (3-dimentional) adherend surface. JP 2016 029139 A suggests that in such PSA sheet application to the non-flat adherend surface, to facilitate application while preventing wrinkling during the application, a double-faced PSA sheet premolded to have the corresponding non-flat shape be applied to the adherend. Further, EP 3 521 395 A relates to a double-linered pressure-sensitive adhesive sheet.

SUMMARY OF THE INVENTION

PSA sheets before applied to adherends are, however, typically processed, distributed, stored and so on as release-lined PSA sheets with their adhesive faces (faces applied to adherends) laminated and protected with release liners. When a general release-lined PSA sheet in flat form is molded by the sort of hot-pressing into a non-flat shape, the release liner may suffer damage such as tearing due to the load during the thermoforming; and after the thermoforming or with subsequent aging, the release liner may partially lift from the adhesive face, causing appearance defection and lowering the reliability of adhesive face protection.

An objective of this invention is thus to provide a laminate sheet having a release film laminated to an adhesive face, the laminate sheet being highly thermoformable and being suitable for use in an application where after pre-thermoformed, the release film is removed and the adhesive face is applied to an adherend. Another related objective is to provide a release film suitable as a component of the laminate sheet. Yet another related objective is to provide a method for processing the laminate sheet into non-flat form.

The present description provides a laminate sheet comprising a sheet of a PSA body as well as first and second films laminated on first and second faces of the PSA body, respectively. The second film comprises a resin film and a release layer provided at least to the PSA body side surface of the resin film while satisfying the following conditions: having a Young's modulus at 85 °C (or a "Young's modulus Ess" or simply "Ess" hereinafter) of 500 MPa or greater and having a Young's modulus at 120 °C (or a "Young's modulus $E_{120}$" or simply "$E_{120}$" hereinafter) of 500 MPa or less. The release layer is formed from a solvent-based thermally curable addition-reaction type silicone release agent and a pressure-sensitive adhesive in the PSA body comprises an acrylic pressure-sensitive adhesive.

The laminate sheet in such an embodiment is highly thermoformable with the Young's modulus $E_{120}$ of the second film (release film) limited to 500 MPa or less. For instance, because the second film is easily deformed during thermoforming, it is less susceptible to damage. In addition, because the second film has a release layer on the PSA body side surface, the second film's peel strength on PSA body can be suitably controlled. The second film having a Young's modulus $E_{85}$ of 500 MPa or greater helps suitably form a release layer on the resin film used for preparing the second film. Thus, the laminate sheet is highly moldable (easy to mold) and is suited for use where the release film is removed from the molded laminate sheet and the adhesive face is applied to an adherend.

In the laminate sheet disclosed herein, after hot-pressed at 120 °C for one minute, the second film preferably has a peel strength on PSA body (or a "peel strength $P_{2A}$" hereinafter) of 0.10 N/50mm or greater and 5 N/50mm or less. According to the laminate sheet having a peel strength $P_{2A}$ in this range, the second film can be readily removed from the adhesive face; and during thermoforming or with subsequent aging, the second film can be favorably inhibited from partially lifting from the adhesive face.

The laminate sheet according to some embodiments, the first film is a support film fixed to the first face of the PSA body. The laminate sheet in such an embodiment can be thought as a release-lined single-faced PSA sheet comprising a single-faced PSA sheet having a PSA body on the support film as a non-releasable substrate and further comprising the second film as a release film removably laminated to the adhesive face (the PSA body's second face) of the single-faced PSA sheet.

With respect to the release-lined single-faced PSA sheet, for instance, after thermoformed into a suitable shape (e.g., non-flat shape) corresponding to the adherend's surface shape, upon removal of the release film, the single-faced

PSA sheet can be applied to the adherend surface to easily form a structure in which the support film is bonded via the PSA body to the adherend. It is noted that when the adherend's surface shape is non-flat, the "suitable non-flat shape corresponding to the adherend's surface shape" means a shape closer to the adherend's non-flat surface shape than a flat shape (i.e., a shape that is more readily conformed to the adherend's non-flat surface shape than a flat shape) and is not limited solely to the exact same shape as the adherend's non-flat surface shape. The same also applies to the following description.

In the laminate sheet according to some other embodiments, the first film is a release film. In the laminate sheet in such an embodiment, the first and second films are removably laminated to the first and second faces of the PSA body, respectively. Thus, the PSA body can be thought as a double-faced PSA sheet whose first and second faces are both adhesive faces. The laminate sheet can also be thought as a release-lined double-faced PSA sheet wherein the first and second faces of the double-faced PSA sheet (PSA body) are protected with the first and second films.

For instance, the release-lined double-faced PSA sheet can be preferably used in an application where after thermoformed into a suitable shape (e.g., non-flat shape) corresponding to the adherend's surface shape, upon removal of the first film, the first face of the PSA body is applied to the first adherend surface; and upon subsequent removal of the second film, the second face of the PSA body is applied to the second adherend surface. Alternatively, with respect to the release-lined double-faced PSA sheet, upon removal of the first film, the first face of the PSA body can be applied to a non-releasable component (e.g., resin film) to prepare a release-lined single-faced PSA sheet having a structure in which the component, the PSA body and the second film are layered in this order; and after the release-lined single-faced PSA sheet is thermoformed into a suitable shape (e.g., non-flat shape) corresponding to the adherend's surface shape, upon removal of the second film, the second face of the PSA body can be applied to the adherend surface to easily form a structure in which the component is bonded via the PSA body to the adherend. It is noted that the first adhesive surface and the second adhesive surface can be of two or more individually different (separate) adherends or can be in different locations of one adherend.

In the laminate sheet in an embodiment where the first and second films are both release films, the first film's peel strength on PSA body (or "peel strength $P_{1B}$" hereinafter) is preferably lower than the second film's peel strength on PSA body (or "peel strength $P_{2B}$" hereinafter). The laminate sheet in such an embodiment is typically used in an application where the first film is removed from the PSA body before the second film; and while the first film is being removed, lifting of the PSA body from the second film can be favorably inhibited.

In some preferable embodiments, the PSA body is a PSA layer formed of PSA. In general, as compared with a substrate-supported PSA body having PSA on each side of a substrate (core), the PSA body consisting of the PSA layer (free of a substrate, i.e., a substrate-free PSA body) exhibits superior moldability and flexibility. Thus, the substrate-free PSA body is advantageous from the standpoint of the thermoformability of the laminate sheet and is also preferable from the standpoint of the tightness of adhesion of the PSA body to the adherend surface.

This description provides a release film comprising a resin film and a release layer provided at least to the PSA layer side surface of the resin film while satisfying the following conditions: having a Young's modulus at 85 °C of 500 MPa or greater and having a Young's modulus at 120 °C of 500 MPa or less. For instance, this release film can be preferably used as a component of a laminate sheet disclosed herein, more specifically, at least as the second film of the laminate sheet. The release layer is formed from a solvent-based thermally curable addition-reaction type silicone release agent and a pressure-sensitive adhesive in the PSA body comprises an acrylic pressure-sensitive adhesive.

This description also provides a method for processing a laminate sheet, the method comprising obtaining a laminate sheet disclosed herein, and molding at least a partial area of the laminate sheet into a non-flat shape by pressing while heating. The laminate sheet disclosed herein can be preferably used in an application where it is molded into a desirable non-flat shape by the processing method; and upon removal of the release film from the molded laminate sheet, the adhesive face is applied to an adherend.

## BRIEF DESCRIPTION OF THE DRAWINGS

Fig. 1 shows a cross-sectional diagram schematically illustrating the laminate sheet according to an embodiment.
Fig. 2 shows a perspective diagram schematically illustrating the shape of the bottom mold between the metal molds used in the molding test.
Fig. 3 shows a cross section along line III-III of Fig. 2.
Fig. 4 shows a cross section along line IV-IV of Fig. 2.

## DETAILED DESCRIPTION OF THE INVENTION

Preferred embodiments of the present invention are described below. Matters necessary to practice this

invention other than those specifically referred to in this description can be understood by a person skilled in the art based on the disclosure about implementing the invention in this description and common general knowledge at the time of application. The present invention can be practiced based on the contents disclosed in this description and common technical knowledge in the subject field. In the drawings referenced below, a common reference numeral may be assigned to members or sites producing the same effects, and duplicated descriptions are sometimes omitted or simplified. The embodiments described in the drawings are schematized for clear illustration of the present invention, and do not necessarily represent the accurate size or reduction scale of an actual product provided.

As used herein, the term "PSA" refers to, as described earlier, a material that exists as a soft solid (a viscoelastic material) in a room temperature range and has a property to adhere easily to an adherend with some pressure applied. As defined in "Adhesion : Fundamental and Practice" by C. A. Dahlquist (McLaren & Sons (1966), P. 143), PSA referred to herein may be a material that has a property satisfying complex tensile modulus E* (1Hz) < $10^7$ dyne/cm$^2$ (typically, a material that exhibits the described characteristics at 25 °C).

<Structural example of laminate sheet>

The laminate sheet disclosed herein comprises a sheet of a PSA body, and first and second films laminated on first and second faces of the PSA body. The second film is a release film. The release film here refers to a film of which the face laminated to the PSA body is a releasable face (release face). The first film can be a release film or a non-releasable film (support film).

Fig. 1 schematically illustrates the constitution of the laminate sheet according to an embodiment. Laminate sheet 50 comprises a PSA body 10 as well as first and second films 31 and 32 laminated to the first and second faces 10A and 10B, respectively, of PSA body 10. The second film 32 is a release film of which at least the PSA body 10 side surface is a release face. The PSA body 10 side surface of the first film 31 can be a release face or non-releasable face. In other words, the first film 31 can be a release film or non-releasable film (support film). It is noted that in the first and second films 31 and 32, the surface opposite to the PSA body side can be individually a release face or non-releasable face.

PSA body 10 can be a PSA layer formed of PSA (i.e., a substrate-free PSA body) or a substrate-supported PSA body having PSA on each side of a substrate (core). The PSA in PSA body 10 can be, for instance, a cured product of a photocurable PSA composition.

Laminate sheet 50 can be flat or in a roll. Laminate sheet 50 can be flat (planar) and in roll form.

<Second film>

The second film in the laminate sheet disclosed herein is a release film comprising a resin film and a release layer provided at least to the surface on one side of the resin film. The second film (release film) has a Young's modulus at 85 °C ($E_{85}$) of 500 MPa or greater and a Young's modulus at 120 °C ($E_{120}$) of 500 MPa or less.

As the base film of the second film, a species satisfying the Young's moduli $E_{85}$ and $E_{120}$ can be selected among known plastic films. In this description, the plastic film is typically a non-porous sheet and is conceptually distinct from the non-woven fabric (i.e., conceptually excludes the non-woven fabric).

Examples of the resin material used for forming the plastic film include polyester-based resins such as polyethylene terephthalate (PET), polybutylene terephthalate (PBT) and polyethylene naphthalate (PEN); polyolefinic resins such as polyethylene (PE), polypropylene (PP), ethylene-propylene copolymer and ethylene-butene copolymer; cellulose-based resins such as diacetyl cellulose and triacetyl cellulose (TAC); acetate-based resins; polycarbonates (PC); polyamides (PA) such as nylon 6, nylon 66 and partially aromatic polyamides; polyimides such as transparent polyimide (CPI); polyamide-imides (PAI); polyether ether ketone (PEEK); polysulfone-based resins; polyether sulfone-based (PES-based) resins; cyclic polyolefins such as norbomene-based resins; (meth)acrylic resins; polyvinyl chloride-based resins; polyvinylidene chloride-based resins; polystyrene-based resins; polyvinyl alcohol-based (PVA-based) resins; ethylene-vinyl acetate copolymer (EVA); ethylene-vinyl alcohol copolymer; polyarylate-based resins; and polyphenylene sulfides (PSS). Plastic film formed from one species or a mixture of two or more species among these resin materials can be used as the base film of the second film. Favorable examples include polyester-based resin film (e.g., PET film) whose primary component is a polyester-based resin and polyolefinic film whose primary component is a polyolefinic resin.

The release layer can be formed by providing a release agent to the base film and allowing it to cure (dry, crosslink, react, etc.). As the release agent, a solvent-based thermally curable addition-reaction type silicone-based release agent is used. The thickness of the release layer is not particularly limited and can be selected to obtain desirable release properties. In some embodiments, the release layer has a thickness of suitably 0.01 μm or greater, preferably 0.05 μm or greater, or possibly 0.08 μm or greater. The thickness of the release layer can be, for instance, 3 μm or less, 1 μm or less, or even 0.5 μm or less.

The form of release agent used is solvent-based. In some embodiments, from the standpoint of the ease of

adjusting the viscosity and the likelihood of forming a highly homogenic release layer, etc., it is preferable to use a solvent-based release agent comprising a release-layer-forming component in an organic solvent. The organic solvent can be, for instance, one species of solvent or a mixture of two or more species of solvent selected among aliphatic hydrocarbons such as hexane and heptane; cyclic hydrocarbons such as cyclohexane; aromatic compounds (typically aromatic hydrocarbons) such as toluene and xylene; halogenated alkanes such as 1,2-dichloroethane; ethers such as tert-butyl methyl ether; and ketones such as methyl ethyl ketone. A solvent-based release agent can be applied to a resin film subject to treatment and allowed to dry to form a release layer on the resin film. The resin film coated with the solvent-based release agent is efficiently dried, for instance, at 40 °C or higher, preferably at 60 °C or higher, or more preferably at 70 °C or higher. The drying temperature is preferably below 120 °C, more preferably 110 °C or lower, possibly 100 °C or lower, or even 90 °C or lower.

According to the present invention, the release agent is an addition-reaction type silicone-based release agent. From the standpoint of the reactivity, stability of performance, etc., in some embodiments, a silicone-based release agent of an addition reaction type is used. The addition-reaction-type silicone-based release agent usually comprises an organopolysiloxane having an organohydrogenpolysiloxane and aliphatic unsaturated group. It is solvent-based (solvent type). According to the present invention, a thermally curable addition-reaction-type silicone-based release agent that cures via crosslinking by a thermal addition reaction is used.

As the thermally curable addition-reaction-type silicone release agent, it is possible to use, for instance, a release agent that comprises a Si-H group-containing polysiloxane (a polysiloxane whose molecule has a hydrogen atom (H) bonded to a silicon atom (Si)) and a Si-H reactive polysiloxane (a polysiloxane whose molecule has a Si-H reactive functional group (a functional group reactive with a Si-H bond (covalent bond between Si and H))). Such a release agent cures via crosslinking by an addition reaction between the Si-H group and the Si-H group-reactive functional group.

In the Si-H group-containing polysiloxane, the H-bonded Si can be in the main chain or in a side chain. A preferable polysiloxane has two or more Si-H groups per molecule. The polysiloxane having two or more Si-H groups include dimethyl hydrogen siloxane-based polymer such as poly(dimethyl siloxane-methyl siloxane).

On the other hand, as the Si-H reactive polysiloxane, it is possible to use a polysiloxane in which a Si-H reactive functional group or a side chain including such a functional group is bonded to Si (e.g., terminal or internal Si of the main chain) forming the main chain (skeleton) of a siloxane-based polymer. A particularly preferable polysiloxane has a Si-H reactive functional group directly bonded to Sin in the main chain. A preferable polysiloxane includes two or more Si-H reactive functional groups in the molecule. Examples of the Si-H reactive functional group include alkenyl groups such as vinyl group and hexenyl group.

Examples of the siloxane-based polymer forming the main chain include poly(dialkyl siloxane) (the two alkyl groups can be the same or different) such as poly(dimethyl siloxane), poly(diethyl siloxane) and poly(methyl ethyl siloxane); poly(alkyl aryl siloxane); and a polymer of several Si-containing monomers, such as poly(dimethyl siloxane-methyl siloxane). A particularly favorable main-chain polymer is poly(dimethyl siloxane).

In some embodiments, it is preferable to use a thermally curable addition-reaction-type silicone release agent that comprises a polysiloxane including two or more Si-H groups per molecule as well as a polysiloxane including two or more Si-H reactive functional groups per molecule. The mixing ratio of the Si-H group-containing polysiloxane and the Si-H reactive polysiloxane in the release agent is not particularly limited as long as it is in a range capable of achieving silicone transfer in an aforementioned amount upon sufficient curing of the release agent. It is preferably selected so that the X number of moles of Si of Si-H group and the Y number of moles of Si-H reactive functional group satisfy $X \geq Y$ In typical, X:Y is preferably about 1:1 to 2:1 (more preferably 1.2:1 to 1.6:1).

The addition-reaction-type silicone-based release agent may include a catalyst to accelerate the crosslinking reaction. Examples of the catalyst include platinum-based catalysts such as platinum powder, platinic chloride and a derivative thereof. The amount of catalyst added is not particularly limited. For instance, it is preferably selected in the range of 0.005 part to 5 parts by weight (preferably 0.01 part to 1 part by weight) to 100 parts by weight of the Si-H reactive polysiloxane.

As the silicone-based release agent, it is possible to use a mixture of aforementioned components suitably prepared or obtained, or a commercial product that includes aforementioned components. Besides the aforementioned components, other known and commonly used additives can be suitably added as necessary, for instance, fillers, anti-static agent, antioxidant, UV absorber, plasticizer, colorant (dye, pigment) and so on.

The second film's Young's modulus at 120 °C ($E_{120}$) is 500 MPa or less as described above, preferably 400 MPa or less, possibly 300 MPa or less, 200 MPa or less, 100 MPa or less, or even 20 MPa or less. With decreasing $E_{120}$, the thermoformability tends to increase. The minimum $E_{120}$ is not particularly limited. In some embodiments, from the standpoint of readily obtaining at least the prescribed Young's modulus at 85 °C ($E_{85}$), the second film's $E_{120}$ is suitably 2 MPa or greater, preferably 4 MPa or greater, possibly 10 MPa or greater, 70 MPa or greater, 150 MPa or greater, 250 MPa or greater, or even 350 MPa or greater.

The second film's preferable Young's modulus $E_{120}$ range may also vary depending on the type of base film. For instance, when the second film's base film is polyester-based, in some embodiments, the second film's $E_{120}$ is preferably

70 MPa or greater and 500 MPa or less, or more preferably 150 MPa or greater and 400 MPa or less (e.g., 150 MPa or greater and 300 MPa or less, 250 MPa or greater and 400 MPa or less, etc.). When the second film's base film is polyolefinic, in some embodiments, the second film's $E_{120}$ is preferably 2 MPa or greater and 100 MPa or less, or more preferably 2 MPa or greater and 20 MPa or less.

The second film's Young's modulus at 85 °C ($E_{85}$) is 500 MPa or greater as described above. For instance, when the release layer is formed on a base film having a $E_{85}$ of 500 MPa or greater, a second film meeting the $E_{85}$ can be favorably obtained. A base film showing heat resistance with a $E_{85}$ of 500 MPa or greater is preferable because even when heated (to a temperature range between about 70 °C and 100 °C) to dry the release agent or accelerate crosslinking and so on, appearance defection is likely to occur such as deformation (e.g., waving, curling, shrining, etc.) and cloudiness. In some embodiments, the second film's $E_{85}$ can be, for instance, 600 MPa or greater, 700 MPa or greater, 900 MPa or greater, or even 1100 MPa or greater. The minimum $E_{85}$ is not particularly limited. In some embodiments, from the standpoint of readily obtaining at least the prescribed $E_{120}$, the second film's $E_{85}$ can be, for instance, 2000 MPa or less, 1700 MPa or less, 1500 MPa or less, 1200 MPa or less, or even 1000 MPa or less.

The second film's preferable Young's modulus $E_{85}$ range may also vary depending on the type of base film. For instance, when the second film's base film is polyester-based, in some embodiments, the second film's $E_{85}$ is preferably 500 MPa or greater and 2000 MPa or less, or more preferably 600 MPa or greater and 1500 MPa or less (e.g., 700 MPa or greater and 1200 MPa or less, 900 MPa or greater 1500 and MPa or less, etc.). When the second film's base film is polyolefinic, in some embodiments, the second film's $E_{85}$ is preferably 500 MPa or greater and 1500 MPa or less, more preferably 500 MPa or greater and 1200 MPa or less (e.g., 700 MPa or greater and 1500 MPa or less), or possibly even 900 MPa or greater and 1200 MPa or less.

The second film's $E_{85}$ value (MPa) to $E_{120}$ value (MPa) ratio ($E_{85}/E_{120}$) is typically higher than 1. From the standpoint of combining moldability for thermoforming with heat resistance suited for inhibiting appearance defection caused by release treatment at a high level, it is preferably 3 or higher, possibly 5 or higher, 20 or higher, 50 or higher, 100 or higher, or even 160 or higher. The maximum $E_{85}/E_{120}$ ratio value is not particularly limited. It can be, for instance, 500 or lower, 300 or lower, 150 or lower, 80 or lower, 40 or lower, or even 10 or lower.

The second film's preferable $E_{85}/IE_{120}$ ratio value range may also vary depending on the type of base film. For instance, when the second film's base film is polyester-based, in some embodiments, the second film's $E_{85}/E_{120}$ ratio value is preferably 3 or higher and 40 or lower (e.g., 3 or higher and 10 or lower). When the second film's base film is polyolefinic, in some embodiments, the second film's $E_{85}/E_{120}$ ratio value is preferably 20 or higher and 500 or lower, or more preferably 50 or higher and 300 or lower (e.g., 100 or higher and 300 or lower).

In some embodiments, from the standpoint of preventing tearing during thermal molding, the second film has an elongation at break at 120 °C (or an "elongation at break $L_{120}$" or simply "$L_{120}$" hereinafter) of suitably 230 % or higher, preferably 250 % or higher, possibly 300 % or higher, 400 % or higher, or even 500 % or higher. The maximum elongation at break $L_{120}$ of the second film is not particularly limited. In some embodiments, the second film's $L_{120}$ can be, for instance, 1000 % or lower, 700 % or lower, 500 % or lower, or even 400 % or lower.

The minimum and maximum $E_{85}/E_{120}$ ratio values of the second film can be preferably applied to the minimum and maximum $E_{85}/E_{120}$ ratio values of the first film (possibly a support film or release film). The minimum and maximum elongation at break values of the second film can also be preferably applied to the minimum and maximum elongation at break value of the first film when the first film is a release film.

It is noted that in this description, the Young's modulus and elongation at break of a film (possibly the first film, second film, base film thereof, etc.) are determined by the methods described later in Examples. The Young's modulus and elongation at break can be adjusted by the film composition and production method.

<First film>

The first film in the laminate sheet disclosed herein can be a support film (non-releasable film) fixed to the first face of the PSA body forming the laminate sheet, or a release film having a release face on the side facing the PSA body's first face.

In an embodiment where the first film is a support film, as the support film's base film, various kinds of plastic film can be used. Examples of possible resin materials used for forming the plastic film include polyester-based resins such as polyethylene terephthalate (PET), polybutylene terephthalate (PBT) and polyethylene naphthalate (PEN); polyolefinic resins such as polyethylene (PE), polypropylene (PP), ethylene-propylene copolymer and ethylene-butene copolymer; cellulose-based resins such as diacetyl cellulose and triacetyl cellulose (TAC); acetate-based resins; polycarbonates (PC); polyamides (PA) such as nylon 6, nylon 66 and partially aromatic polyamides; polyimides such as transparent polyimide (CPI); polyamide-imides (PAI); polyether ether ketone (PEEK); polysulfone-based resins; polyether sulfone-based (PES-based) resins; cyclic polyolefins such as norbomene-based resins; (meth)acrylic resins; polyvinyl chloride-based resins; polyvinylidene chloride-based resins; polystyrene-based resins; polyvinyl alcohol-based (PVA-based) resins; ethylene-vinyl acetate copolymer (EVA) resins; ethylene-vinyl alcohol copolymer; polyarylate-based resins; and

polyphenylene sulfides (PSS). Plastic film formed from one species or a mixture of two or more species among these resin materials can be used as the base film of the support film. Examples of particularly preferable plastic film include cellulose-based film such as diacetyl cellulose film and triacetyl cellulose (TAC) film; polyester-based film such as PET-based film; polyimide-based film such as transparent polyimide (CPI) film; and polyether sulfone (PES) film.

The PSA body side surface of the support film can be subjected to surface treatment such as primer coating, corona discharge treatment and plasma treatment. Such surface treatment may help tighten the adhesion (prevent anchoring failure) between the PSA body side surface and the PSA body.

An embodiment where the first film is a release film, the constitution of the release film is not particularly limited. Examples of release film usable as the first film include a release film comprising a resin film as base film and a release layer provided at least to one face of the resin film; and a release film formed from a low-adhesive resin such as a fluoropolymer (polytetrafluoroethylene, etc.) and polyolefinic resin (polyethylene, polypropylene, etc.). In some embodiments, as the first film, it is preferable to use a release film comprising a resin film as base film and a release layer provided at least to one face of the resin film. The first film in the laminate sheet disclosed herein may be obtained by providing the same resin film as the second film in the laminate sheet or a resin film differing only in thickness therefrom with the same or a different release layer as the second film.

The first film's Young's modulus at 120 °C ($E_{120}$) is not particularly limited. It can be 500 MPa or less, or greater than 500MPa. In some embodiments, the first film's $E_{120}$ is suitably 500 MPa or less. For instance, in the laminated sheet whose first film is a support film or in the laminated sheet whose first film is a release film possibly subjected to thermoforming with the first film laminated to the PSA body's first face, the first film's $E_{120}$ is suitably 500 MPa or less, preferably 400 MPa or less, possibly 300 MPa or less, 200 MPa or less, 100 MPa or less, or even 20 MPa or less. The first film's minimum $E_{120}$ is not particularly limited. For instance, it can be 2 MPa or greater, 4 MPa or greater, 10 MPa or greater, 70 MPa or greater, 150 MPa or greater, 250 MPa or greater, or 350 MPa or greater.

The first film's Young's modulus at 85 °C ($E_{85}$) is not particularly limited. It can be 500 MPa or greater, or less than 500MPa. In an embodiment where the first film is a release film comprising a resin film as base film and a release layer provided at least to one face of the resin film, from the standpoint of preventing appearance defection attributed to formation of the release layer on the base film, the first film's $E_{85}$ is preferably 500 MPa or greater, possibly 600 MPa or greater, 700 MPa or greater, 900 MPa or greater, or even 1100 MPa or greater. The first film's maximum $E_{85}$ is not particularly limited. For instance, it can be 2000 MPa or less, 1700 MPa or less, 1500 MPa or less, 1200 MPa or less, or even 1000 MPa or less.

In the laminate sheet disclosed herein, the plastic film used as the support film or base film of release film may be a non-stretched film, uni-axially stretched film or bi-axially stretched film. The plastic film may have a monolayer structure or a multilayer (e.g., three-layer) structure including two or more sublayers. The plastic film may include a known additive that can be used for support film or release film of PSA sheets, such as antioxidant, anti-aging agent, heat resistant stabilizer, photostabilizer, UV ray absorber, colorant such as pigment and dye, slip agent, filler, antistatic agent, nucleating agent, etc. In a multi-layer plastic film, each additive can be added in each sublayer or in some sublayers.

<PSA body>

The PSA body in the laminate sheet disclosed herein can be a substrate-free PSA body formed of a PSA layer constituted with a PSA or a substrate-supported PSA body having PSA on each side of a substrate (core).

The type of PSA in the PSA body is not particularly limited. Generally, it can be one, two or more species of PSA selected among various known species of PSA, such as an acrylic PSA, rubber-based PSA (natural rubber-based, synthetic rubber-based, their mixture-based, etc.), silicone-based PSA, polyester-based PSA, urethane-based PSA, polyether-based PSA, polyamide-based PSA and fluorine-based PSA. According to the present invention, the PSA in the PSA body comprises an acrylic PSA. In a PSA body preferable from the standpoint of the transparency, weatherability, etc., of the PSA in the PSA body, the acrylic PSA content is 50 % by weight or greater, more preferably 70 % by weight or greater, or yet more preferably 90 % by weight or greater. The ratio of acrylic PSA can be greater than 98 % by weight, or the PSA body may essentially consist of an acrylic PSA.

Here, the acrylic PSA as used herein refers to a PSA comprising an acrylic polymer as base polymer (the primary component among polymers, i.e. a component accounting for more than 50 % by weight). The same applies to the rubber-based PSA and other PSA.

As used herein, the term "(meth)acrylate" comprehensively refers to acrylate and methacrylate. Similarly, the term "(meth)acryloyl" comprehensively refers to acryloyl and methacryloyl while the term "(meth)acryl" comprehensively refers to acryl and methacryl.

In this description, the acrylic polymer refers to a polymer that comprises a (meth)acrylic monomer as a monomeric component constituting the acrylic polymer. In other words, it refers to a polymer comprising a monomer unit derived from a (meth)acrylic monomer. Herein, the (meth)acrylic monomer refers to a monomer having at least one (meth)acryloyl group per molecule.

Although not particularly limited to, in an embodiment of the art disclosed herein, the PSA body can be preferably prepared, using a PSA composition that comprises monomeric components that constitute the acrylic polymer. Hereinafter, such a PSA composition may be referred to as an "acrylic PSA composition." Herein, the term "monomeric components that constitute an acrylic polymer" refers to monomeric components constituting the acrylic polymer in the PSA obtained from the acrylic PSA composition. In the acrylic PSA composition, the monomeric components may be included as unreacted monomers (i.e., as starting monomers whose polymerizable functional groups are unreacted), in a polymerized form (i.e., as a monomer unit), or in both forms.

In an embodiment of the art disclosed herein, the PSA body can be formed with a PSA composition comprising as a monomeric component constituting the acrylic polymer, a component (A) described below. In a preferable embodiment, the PSA body can be preferably formed with an acrylic PSA composition that comprises at least the component (A) as a monomeric component constituting the acrylic polymer and further comprises, as necessary, one or each of components (B) and (C) described below.

(Component (A))

The component (A) is an alkyl (meth)acrylate having an alkyl group with 2 to 18 carbons at the ester end. Hereinafter, an alkyl (meth)acrylate having an alkyl group with a number of carbons ranging from X up to Y at the ester end may be represented by "$C_{X-Y}$ alkyl (meth)acrylate." The structure of $C_{2-18}$ alkyl group in the $C_{2-18}$ alkyl (meth)acrylate is not particularly limited. The alkyl group can be either a straight chain or a branched chain. For the component (A), these $C_{2-18}$ alkyl (meth)acrylates can be used singly as one species or in combination of two or more species.

Examples of a $C_{2-18}$ alkyl (meth)acrylate having a straight-chain alkyl group at the ester end include ethyl (meth) acrylate, n-propyl (meth)acrylate, n-butyl (meth)acrylate, n-pentyl (meth)acrylate, n-hexyl (meth)acrylate, n-heptyl (meth) acrylate, n-octyl (meth)acrylate, n-nonyl (meth)acrylate, n-decyl (meth)acrylate, n-undecyl (meth)acrylate, n-dodecyl (meth)acrylate, n-tridecyl (meth)acrylate, n-tetradecyl (meth)acrylate, n-pentadecyl (meth)acrylate, n-hexadecyl (meth) acrylate, n-heptadecyl (meth)acrylate, and n-octadecyl (meth)acrylate. Examples of a $C_{3-18}$ alkyl (meth)acrylate having a branched alkyl group at the ester end include isopropyl (meth)acrylate, tert-butyl (meth)acrylate, isobutyl (meth)acrylate, isopentyl (meth)acrylate, tert-pentyl (meth)acrylate, neopentyl (meth)acrylate, isohexyl (meth)acrylate, isoheptyl (meth) acrylate, 2-ethylhexyl (meth)acrylate, isooctyl (meth)acrylate, isononyl (meth)acrylate, isodecyl (meth)acrylate, 2-propylheptyl (meth)acrylate, isoundecyl (meth)acrylate, isododecyl (meth)acrylate, isotridecyl (meth)acrylate, isomyristyl (meth)acrylate, isopentadecyl (meth)acrylate, isohexadecyl (meth)acrylate, isoheptadecyl (meth)acrylate, and isostearyl (meth)acrylate. The art disclosed herein can be preferably implemented in an embodiment where the component (A) comprises one, two or more species selected from $C_{4-9}$ alkyl acrylates. Preferable examples of $C_{4-9}$ alkyl acrylates include n-butyl acrylate, 2-ethylhexyl acrylate, isooctyl acrylate and isononyl acrylate.

(Component (B))

The component (B) is a monomer selected from the group consisting of alicyclic monomers and hetero-ring-containing monomers (heterocyclic monomers). The component (B) is typically used in combination with the component (A) and may contribute to increases in cohesion, transparency and heat resistance of the PSA, etc.

As the alicyclic monomer, any monomer having an alicyclic structure-containing group as well as an unsaturated double bond-containing polymerizable functional group such as a (meth)acryloyl group or a vinyl group may be used without limitations. The alicyclic monomers can be used singly as one species or in combination of two or more species. As used herein, the term "alicyclic structure-containing group" refers to a moiety having at least one alicyclic structure. The term "alicyclic structure" refers to a carbocyclic ring structure which may be saturated or unsaturated, but may not be aromatic. In this description, the alicyclic structure-containing group may be simply referred to as "alicyclic group." Preferable examples of the alicyclic group include a hydrocarbon group and a hydrocarbon-oxy group each having an alicyclic structure.

In the art disclosed herein, preferable alicyclic monomers include an alicyclic (meth)acrylate having an alicyclic group and a (meth)acryloyl group. Specific examples of alicyclic (meth)acrylates include cyclopropyl (meth)acrylate, cyclobutyl (meth)acrylate, cyclopentyl (meth)acrylate, cyclohexyl (meth)acrylate, cycloheptyl (meth)acrylate, cyclooctyl (meth)acrylate, isobomyl (meth)acrylate, and dicyclopentanyl (meth)acrylate as well as HPMPA, TMA-2 and HCPA represented by the formulas shown below.

[Chem 1]

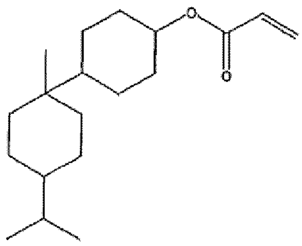

HPMPA ,

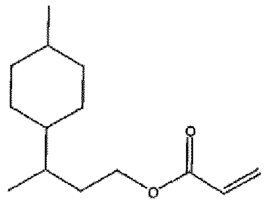

TMA-2 ,

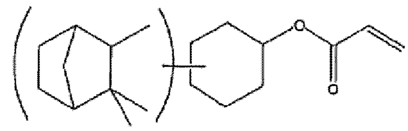

HCPA

There are no particular limitations to the number of carbons of the alicyclic group in the alicyclic monomer (in an alicyclic (meth)acrylate, the number of carbons in the alicyclic (meth)acrylate excluding the (meth)acryloyl group). For instance, an alicyclic monomer whose alicyclic group has 4 to 24 (preferably 5 to 18, more preferably 5 to 12) carbons can be used. In particular, cyclohexyl acrylate (CHA), cyclohexyl methacrylate, isobomyl acrylate (IBXA) and isobomyl methacrylate are preferable. CHA and IBXA are more preferable while CHA is particularly preferable.

Examples of the heterocyclic monomers include cyclic nitrogen-containing monomers and cyclic ether group-containing monomers. Similar to the alicyclic monomer, the heterocyclic monomer can contribute to increases in cohesion, transparency and heat resistance of the PSA. It may also contribute to increase the adhesive strength and cohesive strength of the PSA. Heterocyclic monomers can be used solely as one species or in combination of two or more species.

As the cyclic nitrogen-containing monomer, any monomer having a cyclic nitrogen-containing structure and an unsaturated double bond-containing polymerizable functional group such as a (meth)acryloyl group or a vinyl group may be used without limitations. The cyclic nitrogen-containing structure preferably has a nitrogen atom in the ring structure. Examples of the cyclic nitrogen-containing monomer include vinyl lactam monomers such as N-vinylpyrrolidone, N-vinyl-ε-caprolactam, methylvinylpyrrolidone, etc.; oxazoline group-containing monomers such as 2-vinyl-2-oxazoline, 2-vinyl-5-methyl-2-oxazoline, 2-isopropenyl-2-oxazoline, etc.; nitrogen-containing heterocyclic vinyl monomers such as vinylpyridine, vinylpiperidone, vinylpyrimidine, vinylpiperazine, vinylpyrazine, vinylpyrrole, vinylimidazole, vinylmorpholine, etc.. The cyclic nitrogen-containing monomer may also be a (meth)acrylic monomer having a nitrogen-containing heterocyclic ring such as a morpholine ring, a piperidine ring, a pyrrolidine ring, a piperazine ring, an aziridine ring, etc. Specific examples include N-acryloyl morpholine, N-acryloyl piperidine, N-methacryloyl piperidine, N-acryloyl pyrrolidine, N-acryloyl aziridine, etc. Among them, vinyl lactam monomers are preferable in view of cohesiveness, and N-vinylpyrrolidone is particularly preferable.

As the cyclic ether group-containing monomer, any monomer having a cyclic ether group such as an epoxy group or an oxetane group as well as an unsaturated double bond-containing polymerizable functional group such as a (meth) acryloyl group or a vinyl group may be used without limitations. Examples of the epoxy group-containing monomer include glycidyl (meth)acrylate, 3,4-epoxycyclohexylmethyl (meth)acrylate, and 4-hydroxybutyl (meth)acrylate glycidyl ether. Examples of the oxetane group-containing monomer include 3-oxetanylmethyl (meth)acrylate, 3-methyl-oxetanylmethyl (meth)acrylate, 3-ethyl-oxetanylmethyl (meth)acrylate, 3-butyl-oxetanylmethyl (meth)acrylate, and 3-hexyl-oxetanylmethyl (meth)acrylate.

(Component (C))

The component (C) is a monomer having at least either a hydroxyl group or a carboxyl group.

As the hydroxyl group-containing monomer, any species having a hydroxyl group as well as an unsaturated double bond-containing polymerizable functional group, such as a (meth)acryloyl group or a vinyl group can be used without particular limitations. For the hydroxyl group-containing monomer, solely one species or a combination of two or more species can be used. Examples of the hydroxyl group-containing monomer include hydroxyalkyl (meth)acrylates such as 2-hydroxyethyl (meth)acrylate, 3-hydroxypropyl (meth)acrylate, 4-hydroxybutyl (meth)acrylate, 6-hydroxyhexyl (meth)acrylate and 8-hydroxyoctyl (meth)acrylate; and hydroxyalkylcycloalkane (meth)acrylates such as (4-hydroxymethylcyclohexyl)methyl (meth)acrylate. Other examples include hydroxyethyl(meth)acrylamide, allyl alcohol, 2-hydroxyethyl vinyl ether, 4-hydroxybutyl vinyl ether and diethylene glycol monovinyl ether. Among these, hydroxyalkyl (meth) acrylates are preferable. For instance, a hydroxyalkyl (meth)acrylate having a hydroxyalkyl group of 2 to 6 carbons at the ester terminus can be preferably used. In a preferable embodiment, as the hydroxyl group-containing monomer, one, two or more species can be selected and used from 2-hydroxyethyl acrylate (HEA), 2-hydroxyethyl methacrylate, 4-hydroxybutyl acrylate (4HBA) and 4-hydroxybutyl methacrylate. In some preferable embodiments of the art disclosed herein, the hydroxyl group-containing monomer used can be solely 4HBA, solely HEA, or a combination of 4HBA and HEA.

As the carboxyl group-containing monomer, any monomer having a carboxyl group and an unsaturated double bond-containing polymerizable functional group such as a (meth)acryloyl group and a vinyl group may be used without particular limitations. Carboxyl group-containing monomers can be used singly as one species or in combination of two or more species. Examples of the carboxyl group-containing monomer include ethylenic unsaturated monocarboxylic acids such as acrylic acid, methacrylic acid, crotonic acid, carboxyethyl (meth)acrylate, carboxypentyl (meth)acrylate, etc.; and ethylenic unsaturated dicarboxylic acids such as itaconic acid, maleic acid, fumaric acid, citraconic acid, etc.; as well as metal salts (e.g., alkali metal salts) of these; anhydrides of the ethylenic unsaturated dicarboxylic acids such as maleic anhydride, itaconic anhydride, etc.. Among these, acrylic acid and methacrylic acid are preferable, and acrylic acid is particularly preferable.

The art disclosed herein can be preferably implemented in an embodiment where the component (C) comprises a hydroxyl group-containing monomer. In other words, it is preferable that the component (C) either consists of a hydroxyl group-containing monomer or comprises a hydroxyl group-containing monomer and a carboxyl group-containing monomer. When the component (C) comprises a hydroxyl group-containing monomer and a carboxyl group-containing monomer, the hydroxyl group-containing monomer content in the entire component (C) is preferably greater than about 50 % by weight, or more preferably about 80 % by weight or greater (e.g., about 90 % by weight or greater). It is preferable to increase the hydroxyl group-containing monomer content in the component (C) from the standpoint of reducing metal corrosion caused by the carboxyl group, etc. The art disclosed herein can be preferably implemented in an embodiment where the monomeric components are essentially free of a carboxyl group-containing monomer. For instance, the carboxyl group-containing monomer content in the monomeric components can be less than about 1 % by weight, preferably less than about 0.5 % by weight, or more preferably less than about 0.2 % by weight.

The ratio (content) of component (A) to all monomeric components is not particularly limited. From the standpoint of providing suitable cohesion to the PSA, the component (A) content is usually suitably about 90 % by weight or less, preferably about 85 % by weight or less, or yet more preferably about 75 % by weight or less. In a preferable embodiment, the component (A) content can be about 70 % by weight or less (more preferably about 60 % by weight or less, or even about 50 % by weight or less, e.g. about 45 % by weight or less). From the standpoint of the initial adhesiveness to an adherend, etc., the component (A) content is preferably about 30 % by weight or greater, or more preferably about 35 % by weight or greater. In an embodiment, the ratio of component (A) to all monomeric components can be, for instance, about 30 to 75 % by weight.

When the monomeric components include a component (B), the ratio (content) of component (B) to all monomeric components is not particularly limited. In view of the balance of adhesive properties, the component (B) content is usually suitably about 3 % by weight or greater, preferably about 5 % by weight or greater, or more preferably about 8 % by weight or greater, or possibly about 10 % by weight or greater. From the standpoint of the initial adhesion to an adherend, etc., the component (B) content is suitably about 65 % by weight or less, preferably about 60 % by weight or less, or more preferably about 55 % by weight or less (or even about 50 % by weight or less, e.g. less than about 50 % by weight). In a preferable embodiment, the ratio of component (B) to all monomeric components can be about 15 % by weight or greater, about 20 % by weight or greater, about 25 % by weight or greater, or even about 30 % by weight or greater (e.g., about 35 % by eight or greater). In an embodiment, the ratio of component (B) to all monomeric components can be, for instance, about 20 to 50 % by weight.

When the monomeric components include a component (C), the ratio (content) of component (C) to all monomeric components is not particularly limited. From the standpoint of the initial adhesion to an adherend, etc., the component (C) content is typically about 3 % by weight or greater, preferably about 5 % by weight or greater, or more preferably about 8 % by weight or greater (e.g., about 10 % by weight or greater). From the standpoint of providing suitable cohesion to the PSA, the component (C) content is usually preferably about 35 % by weight or less, more preferably about 30 % by weight or less, or even more preferably about 25 % by weight or less. In an embodiment, the component (C) content can be, for instance, about 15 % to 30 % by weight.

(Optional monomer)

The monomers forming the acrylic polymer may comprise other monomer(s) (or "optional monomer(s)" hereinafter) in addition to the component (A), component (B) and component (C).

Examples of the optional monomers include an alkyl (meth)acrylate that does not belong to the component (A), that is, an alkyl (meth)acrylate having an alkyl group with a single carbon or 19 or more (e.g., 19 to 24) carbons. Specific examples of such an alkyl (meth)acrylate include methyl (meth)acrylate, n-nonadecyl (meth)acrylate, isononadecyl (meth)acrylate, n-eicosyl (meth)acrylate, isoeicosyl (meth)acrylate, etc. These can be used singly as one species or in combination of two or more species.

Other examples of the optional monomer include a monomer having a functional group that is neither a hydroxyl group nor a carboxyl group. Such a functional group-containing monomer can be used to introduce crosslinking points in the acrylic polymer or to increase the cohesive strength of acrylic polymer. Examples of such a functional group-containing

monomer include amide group-containing monomers such as (meth)acrylamide, N,N-dimethyl(meth)acrylamide, N-methylol(meth)acrylamide, etc.; cyano group-containing monomers such as acrylonitrile, methacrylonitrile, etc.; sulfonic acid group-containing monomers such as styrene sulfonic acid, allyl sulfonic acid, 2-(meth)acrylamido-2-methylpropanesulfonic acid, etc.; phosphoric acid group-containing monomers such as 2-hydroxyethyl acryloyl phosphate, etc.; keto group-containing monomers such as diacetone (meth)acrylamide, diacetone (meth)acrylate, vinyl methyl ketone, vinyl acetoacetate, etc.; isocyanate group-containing monomers such as 2-(meth)acryloyloxyethyl isocyanate, etc.; alkoxyl group-containing monomers such as methoxyethyl (meth)acrylate, ethoxyethyl (meth)acrylate, etc.; alkoxysilyl group-containing monomers such as (3-(meth)acryloxypropyl)trimethoxysilane, (3-(meth)acryloxypropyl)triethoxysilane, etc.. These can be used singly as one species or in combination of two or more species.

To adjust the acrylic polymer's glass transition temperature (Tg) or to increase the cohesive strength, etc., the monomeric components in the art disclosed herein may comprise, as the optional monomer, a monomer that is copolymerizable with the components (A), (B) and (C) other than those listed above. Examples of such a copolymerizable monomer include carboxylic acid vinyl esters such as vinyl acetate, vinyl propionate, etc.; aromatic vinyl compounds such as styrene, substituted styrenes ($\alpha$ - methylstyrene, etc.), vinyl toluene, etc.; aromatic ring-containing (meth)acrylates such as aryl (meth)acrylate (e.g., phenyl (meth)acrylate), aryloxyalkyl (meth)acrylate (e.g., phenoxyethyl (meth)acrylate), arylalkyl (meth)acrylate (e.g., benzyl (meth)acrylate), etc.; olefinic monomers such as ethylene, propylene, isoprene, butadiene, isobutylene, etc.; chlorine-containing monomers such as vinyl chloride, vinylidene chloride, etc.; vinyl ether-based monomers such as methyl vinyl ether, ethyl vinyl ether, etc.; a macromonomer having a radically polymerizable vinyl group at the monomer end in a vinylic polymer. These can be used singly as one species or in combination of two or more species.

The amounts of these optional monomers used are not particularly limited and can be suitably selected. Usually, the total amount of optional monomers used is suitably less than about 50 % by weight of the monomeric components, preferably about 30 % by weight or less, or more preferably about 20 % by weight or less. The art disclosed herein can be preferably implemented in an embodiment where the total amount of optional monomers used is about 10 % by weight or less (e.g., about 5 % by weight or less) of the monomeric components. When using an optional monomer, from the standpoint of suitably bringing about the effect to increase the adhesive strength or cohesive strength, the amount of the optional monomer used is suitably about 0.5 % by weight or more of the monomeric components, or preferably about 0.8 % by weight or more. The art disclosed herein can be preferably implemented also in an embodiment using essentially no optional monomers (e.g., an embodiment where the amount of optional monomer(s) used is about 0.3 % by weight or less of the monomeric components, or typically about 0.1 % by weight or less).

The component (A), component (B), component (C) and optional monomers described above are typically monofunctional monomers. Besides these monofunctional monomers, for adjusting the storage modulus of the PSA, etc., the monomeric components can comprise a suitable amount of a polyfunctional monomer as necessary. As used herein, the monofunctional monomer refers to a monomer having a single polymerizable functional group (typically a radically polymerizable functional group) having an unsaturated double bond, such as a (meth)acryloyl group or a vinyl group. On the other hand, the polyfunctional monomer refers to a monomer having at least two such polymerizable functional groups as described later.

(Polyfunctional monomer)

The polyfunctional monomer has at least two polymerizable functional groups (radically polymerizable functional groups in typical) having unsaturated double bonds, such as (meth)acryloyl group, vinyl group, etc. Examples of the polyfunctional monomer include an ester of a polyol and a (meth)acrylic acid such as ethylene glycol di(meth)acrylate, propylene glycol di(meth)acrylate, polyethylene glycol di(meth)acrylate, polypropylene glycol di(meth)acrylate, neopentyl glycol di(meth)acrylate, pentaerythritol di(meth)acrylate, pentaerythritol tri(meth)acrylate, dipentaerythritol hexa(meth)acrylate, 1,2-ethyleneglycol di(meth)acrylate, 1,4-butanediol di(meth)acrylate, 1,6-hexanediol di(meth)acrylate, 1,12-dodecanediol di(meth)acrylate, trimethylolpropane tri(meth)acrylate, tetramethylolmethane tri(meth)acrylate, etc.; allyl (meth)acrylate, vinyl (meth)acrylate, divinylbenzene, epoxy acrylate, polyester acrylate, urethane acrylate. Among them, preferable examples are trimethylolpropane tri(meth)acrylate, 1,6-hexanediol di(meth)acrylate, and dipentaerythritol hexa(meth)acrylate. A particularly preferable example is 1,6-hexanediol diacrylate (HDDA). The polyfunctional monomers can be used solely as one species or in combination of two or more species. From the standpoint of the reactivity, etc., it is usually preferable to use a polyfunctional monomer having two or more acryloyl groups.

The amount of the polyfunctional monomer used is not particularly limited. It can be set to suitably achieve the purpose of use of the polyfunctional monomer. In some embodiments, the polyfunctional monomer can be used in an amount of preferably about 3% by weight or less, more preferably 2% by weight or less, or even more preferably about 1% by weight or less (e.g., about 0.7 % by weight or less) of the monomeric components. When using a polyfunctional monomer, its lower limit of use should just be greater than 0 % by weight and is not particularly limited. In typical, the amount of polyfunctional monomer used is suitably about 0.001 % by weight or greater (e.g., about 0.01 % by weight or greater) of

the monomeric components; or it can be 0.05 % by weight or greater, or even 0.1 % by weight or greater.

Although not particularly limited, the combined components (A), (B) and (C) content in all the monomeric components is typically greater than about 50 % by weight, preferably about 70 % by weight or greater, more preferably about 80 % by weight or greater, or yet more preferably about 90 % by weight or greater. The art disclosed herein can be preferably implemented in an embodiment where their combined content is about 95 % by weight or greater (e.g., about 99 % by weight or greater). Their combined content can be 100 % by weight. The art disclosed herein can be preferably implemented in an embodiment where their combined content accounts for 99.999 % by weight or less (e.g., 99.99 % by weight or less) of the monomeric components.

The Tg of the copolymer corresponding to the composition of the monomeric components is not particularly limited. For instance, it can be about -70 °C or above. In some embodiments, the copolymer's Tg can be, for instance, about -60 °C or above, preferably about -55 °C or above, more preferably about -50 °C or above, or possibly about -45 °C or above. The art disclosed herein can be preferably implemented also in an embodiment where the copolymer's Tg is about -40 °C or above (e.g., about -35 °C or above) or even -30 °C or above. The copolymer's Tg is usually suitably about 0 °C or below. From the standpoint of the PSA body's adhesion to adherends and low-temperature properties, etc., it is preferably about -10 °C or below. In some embodiments, the copolymer's Tg can be about -15 °C or below, or even -20 °C or below. The art disclosed herein can be preferably implemented, for instance, in an embodiment where the copolymer's Tg is about -30 °C or above and about -10 °C or below.

The Tg of the copolymer corresponding to the composition of the monomeric components herein refers to the value determined by the Fox equation based on the composition of the monomeric components. As shown below, the Fox equation is a relational expression between the Tg of a copolymer and glass transition temperatures Tgi of homopolymers of the respective monomers constituting the copolymer.

$$1/Tg = \Sigma(Wi/Tgi)$$

In the Fox equation above, Tg represents the glass transition temperature (unit: K) of the copolymer, Wi the weight fraction (copolymerization ratio by weight) of a monomer i in the copolymer, and Tgi the glass transition temperature (unit: K) of homopolymer of the monomer i.

As the glass transition temperatures of homopolymers used for determining the Tg value, values found in publicly known documents are used, for example, values given in "Polymer Handbook" (3rd edition, John Wiley & Sons, Inc., Year 1989). When the literature provides two or more values for a certain monomer, the highest value is used. When no glass transition temperatures of the corresponding homopolymers are given in known documents, values obtained by the measurement method described in Japanese Patent Application Publication No. 2007-51271 are used. With respect to monomers for which nominal glass transition temperatures of homopolymers are provided by a maker, etc., the nominal values can be used as well.

(PSA Composition)

The PSA body in the art disclosed herein can be formed with a PSA composition that comprises monomeric components in a composition as described above as a polymerized product, in a non-polymerized form (i.e., in a form where the polymerizable functional groups are still unreacted), or as a mixture of these. The PSA composition may be in various forms such as a solvent-based PSA composition which comprises PSA (adhesive components) in an organic solvent; an aqueous PSA composition which comprises PSA dispersed in an aqueous solvent; an active energy ray-curable PSA composition prepared so as to form PSA when cured with active energy rays such as UV rays, radioactive rays, etc.; a hot melt-type PSA composition which is heated to melting for application and allowed to cool to around room temperature to form PSA.

Herein, the term "active energy ray" in this description refers to an energy ray having energy capable of causing a chemical reaction such as polymerization, crosslinking, initiator decomposition, etc. Examples of the active energy ray herein include lights such as ultraviolet (UV) rays, visible lights, infrared lights, radioactive rays such as $\alpha$ rays, $\beta$ rays, $\gamma$ rays, electron beam, neutron radiation, X rays, etc.

The PSA composition typically comprises at least some of the monomeric components (possibly a certain species among the monomers or a fraction of its quantity) as a polymer. The polymerization method for forming the polymer is not particularly limited. Heretofore known various polymerization methods can be suitably used. For instance, thermal polymerization (typically carried out in the presence of a thermal polymerization initiator) such as solution polymerization, emulsion polymerization, bulk polymerization, etc.; photopolymerization carried out by irradiating light such as UV light, etc. (typically in the presence of a photopolymerization initiator); active energy ray polymerization carried out by irradiating radioactive rays such as $\beta$ rays, $\gamma$ rays, etc.. In particular, photopolymerization is preferable. In these polymerization methods, the embodiment of polymerization is not particularly limited. It can be carried out with a suitable selection of a heretofore known monomer supply method, polymerization conditions (temperature, time, pressure, irradiance of light,

irradiance of radioactive rays, etc.), materials (polymerization initiator, surfactant, etc.) used besides the monomers, etc.

For the polymerization, depending on the polymerization method and embodiment of polymerization, etc., a known or commonly used photopolymerization initiator or thermal polymerization initiator can be used. These polymerization initiators can be used singly as one species or in a suitable combination of two or more species.

Examples of the photopolymerization initiator include, but not particularly limited to, ketal-based photopolymerization initiators, acetophenone-based photopolymerization initiators, benzoin ether-based photopolymerization initiators, acylphosphine oxide-based photopolymerization initiators, $\alpha$-ketol-based photopolymerization initiators, aromatic sulfonyl chloride-based photopolymerization initiators, photoactive oxime-based photopolymerization initiators, benzoin-based photopolymerization initiators, benzil-based photopolymerization initiators, benzophenone-based photopolymerization initiators, thioxanthone-based photopolymerization initiators.

The thermal polymerization initiator is not particularly limited. For example, can be used an azo-based polymerization initiator, peroxide-based polymerization initiator, a redox-based polymerization initiator by combination of a peroxide and a reducing agent, a substituted ethane-based polymerization initiator, etc. Thermal polymerization can be preferably carried out at a temperature of, for instance, about 20 °C to 100 °C (typically 40 °C to 80 °C).

Such thermal polymerization initiator or photopolymerization initiator can be used in a usual amount in accordance with the polymerization method, embodiment of polymerization, etc., and there are no particular limitations to the amount. For instance, relative to 100 parts by weight of monomers to be polymerized, about 0.001 to 5 parts by weight (typically about 0.01 to 2 parts by weight, e.g. about 0.01 to 1 part by weight) of polymerization initiator can be used.

PSA composition comprising polymerized and non-polymerized (unreacted) monomeric components

The PSA composition according to a preferable embodiment comprises a polymerization product of a monomer mixture comprising at least some of the monomeric components (starting monomers) that constitute the composition. Typically, of the monomeric components, some are included as a polymerized product and the rest are included as unreacted monomers. The PSA composition including a polymerized product of the monomers and unreacted monomers can be preferably used as an active energy ray-curable PSA composition. The polymerization product of the monomer mixture can be prepared by polymerizing the monomer mixture at least partially.

The polymerization product is preferably a partially-polymerized product of the monomer mixture. Such a partially-polymerized product is a mixture of a polymer formed from the monomer mixture and unreacted monomers, and is typically in a form of syrup (viscous liquid). Hereinafter, a partially-polymerized product having such a form may be referred to as "monomer syrup" or simply "syrup."

The polymerization method for obtaining the polymerization product from the monomers is not particularly limited. A suitable method can be selected and employed among various polymerization methods as those described earlier. From the standpoint of the efficiency and convenience, a photopolymerization method can be preferably employed. According to a photopolymerization, depending on the polymerization conditions such as irradiation light quantity, etc., the polymer conversion of the monomer mixture can be easily controlled.

With respect to the partially-polymerized product, the monomer conversion of the monomer mixture is not particularly limited. The monomer conversion can be, for instance, about 70 % by weight or lower, or preferably about 60 % by weight or lower. From the standpoint of facile preparation of the PSA composition comprising the partially-polymerized product and ease of application, etc., the monomer conversion is usually suitably about 50 % by weight or lower, or preferably about 40 % by weight or lower (e.g., about 35 % by weight or lower). The lower limit of monomer conversion is not particularly limited. It is typically about 1 % by weight or higher, or usually suitably about 5 % by weight or higher.

The PSA composition comprising a partially-polymerized product of the monomer mixture can be easily obtained, for instance, by partially polymerizing a monomer mixture comprising all the starting monomers in accordance with a suitable polymerization method (e.g., photopolymerization). To the PSA composition comprising the partially-polymerized product, other components (e.g., photopolymerization initiator, polyfunctional monomer(s), crosslinking agent, etc.) may be added as necessary. Methods for adding such other components are not particularly limited. For instance, they can be added to the monomer mixture in advance or added to the partially-polymerized product.

The PSA composition disclosed herein may also be in a form where a partially-polymerized product or a fully-polymerized product of a monomer mixture comprising certain species among the monomeric components (starting monomers) is dissolved in the rest of the monomers (unreacted) or a partially-polymerized product thereof. A PSA composition in such a form is also included in examples of the PSA composition comprising polymerized and non-polymerized (unreacted) monomeric components. As used herein, the term "fully-polymerized product" refers to a product whose monomer conversion is higher than 95 % by weight.

When forming PSA from a PSA composition comprising polymerized and non-polymerized monomeric components, a photopolymerization method can be preferably employed as the curing method (polymerization method). With respect to a PSA composition comprising a polymerization product prepared by a photopolymerization method, it is particularly preferable to employ photopolymerization as the curing method. A polymerization product obtained by

photopolymerization already contains a photopolymerization initiator. When the PSA composition comprising the polymerization product is cured to form PSA, the photo-curing can be carried out without any additional photopolymerization initiator. Alternatively, the PSA composition may be obtained by adding a photopolymerization initiator as necessary to the polymerization product prepared by photopolymerization. The additional photopolymerization initiator may be the same as or different from the photopolymerization initiator used in preparing the polymerization product. If the PSA composition is prepared by a method other than photopolymerization, a photopolymerization initiator can be added to make it light-curable. The light-curable PSA composition is advantageous as it can readily form even a thick PSA layer. In a preferable embodiment, the PSA composition can be photopolymerized by UV irradiation to form a PSA. The UV irradiation may be performed using a commonly-known highpressure mercury lamp, low-pressure mercury lamp, or metal halide lamp.

PSA composition comprising monomeric components in a fully-polymerized form

The PSA composition according to another preferable embodiment comprises the monomeric components as a fully-polymerized product. Such a PSA composition may be in a form of, for instance, a solvent-based composition which comprises in an organic solvent an acrylic polymer which is the fully-polymerized product of the monomeric components, a water-dispersed composition such that the acrylic polymer is dispersed in an aqueous solvent, etc.

(Crosslinking agent)

The PSA composition disclosed herein can comprise a crosslinking agent. For the crosslinking agent, a crosslinking agent known or commonly used in the PSA field can be used. Examples include epoxy-based crosslinking agents, isocyanate-based crosslinking agents, silicone-based crosslinking agents, oxazoline-based crosslinking agents, aziridine-based crosslinking agents, silane-based crosslinking agents, alkyletherified melamine-based crosslinking agent, metal chelate-based crosslinking agent. These can be used singly as one species or in combination of two or more species.

The crosslinking agent content (when two or more species of crosslinking agent are included, their combined amount) is not particularly limited. From the standpoint of obtaining a PSA having well-balanced adhesive properties such as adhesive strength, cohesive strength, etc., the crosslinking agent content is usually preferably about 5 parts by weight or less relative to 100 parts by weight of the monomeric components in the PSA composition, preferably about 0.001 to 5 parts by weight, more preferably about 0.001 to 4 parts by weight, or still more preferably about 0.001 to 3 parts by weight. Alternatively, the PSA composition may be free of such a crosslinking agent.

Besides these, the PSA composition disclosed herein may comprise various additives known in the PSA field as necessary. Depending on the application, suitable additives can be added, for example, colorant such as dye and pigment, antistatic agent, surfactant, plasticizer, tackifier resin, surface lubricant, leveling agent, softener, antioxidant, anti-aging agent, photostabilizer, UV absorber, polymerization inhibitor, inorganic or organic filler, meatal in a form of powder, particles or foil, etc.

In the art disclosed herein, as the PSA composition used for forming the PSA body, an active energy ray-curable PSA composition (typically a light-curing PSA composition) can be preferably used. From the standpoint of the environmental hygiene, etc., a solvent-free PSA composition is preferable. As used herein, the solvent-free PSA composition refers to a PSA composition essentially free of a solvent. For instance, a preferable solvent-free PSA composition has a solvent content of about 5 % by weight or less (more preferably about 3 % by weight or less, e.g. about 0.5 % by weight or less). The solvent refers to a volatile component that should be eliminated in the process of forming the PSA body, that is, a volatile component that is not to be a component of the final PSA body formed.

(Substrate-free PSA body)

In some preferable embodiments, the PSA body is a substrate-free PSA body consisting of a PSA layer formed of PSA. In general, as compared with a substrate-supported PSA body having PSA on each side of a substrate (core), the substrate-free PSA body exhibits superior moldability and flexibility. Thus, a laminate sheet having a substrate-free PSA body is advantageous from the standpoint of the thermoformability of the laminate sheet and is also preferable from the standpoint of the tightness of adhesion of the PSA body to the adherend surface. The laminate sheet disclosed herein can be in an embodiment where the first face of a substrate-free PSA body is fixed to a non-releasable support film (first film) and the second face of the substrate-free PSA body is laminated with the second film (release film) or in an embodiment where the first and second faces of a substrate-free PSA body are laminated with the first film and the second film (release film), respectively.

The thickness of the PSA layer forming the substrate-free PSA body is not particularly limited. The PSA layer's thickness is, for instance, possibly about 1 μm to 1000 μm, or suitably about 5 μm to 250 μm. In some embodiments, the

PSA layer's thickness is, for instance, possibly 10 μm or greater, preferably 20 μm or greater, more preferably 25 μm or greater, possibly even greater than 25 μm, 30 μm or greater, 35 μm or greater, 40 μm or greater, or even 45 μm or greater. With increasing thickness of the PSA layer, the PSA layer tends to have a higher ability to distribute stress. This is advantageous in view of inhibiting the release film from partially lifting from the PSA layer surface while being thermoformed or with subsequent aging. On the other hand, when the PSA layer is excessively thick, while the laminate sheet is processed such as thermoformed, cut, etc., the PSA may protrude from an outer edge of the laminate sheet, causing some trouble. Thus, in some embodiments, the PSA layer's thickness is suitably, for instance, 200 μm or less, possibly 150 μm or less, 100 μm or less, or even 70 μm or less.

(Substrate-supported PSA body)

The laminate sheet disclosed herein can be in an embodiment of a substrate-supported PSA body having PSA on each side of a substrate (core). Such a substrate-supported PSA body can be prepared, for instance, by a method where a PSA composition is directly provided to a substrate and allowed to cure (dry, crosslink, react, etc.) to form PSA, a method where PSA formed on a releasable surface (possibly on the release face of the first or second film) is adhered to a substrate, a method combining these, and so on.

As the substrate in the substrate-supported PSA body is not particularly limited. For instance, it is possible to use resin film, paper, fabric, metal foil, a composite of these, etc. Examples of the resin film include the various kinds of plastic film exemplified as the base film of the first or second film. Examples of the paper include Washi paper, kraft paper, glassine paper, high grade paper, synthetic paper and top-coated paper. Examples of the fabrics include woven fabric and non-woven fabric of a single species or a blend of various fibrous substances. Examples of the fibrous substances include cotton, staple fiber, Manila hemp, pulp, rayon, acetate fibers, polyester fibers, polyvinyl alcohol fibers, polyamide fibers and polyolefin fibers. Examples of the metal foil include aluminum foil and copper foil. From the standpoint of the ease of shaping by thermoforming, resin film can be preferably used as the substrate. Substrates preferable from the standpoint of the strength and thermoformability include polyester-based film (PET-based film, etc.) and polyolefinic film. Similar to the support film's PSA body side surface, one or each face of the substrate can be subj ected to surface treatment such as primer coating, corona discharge treatment and plasma treatment.

The substrate's thickness is not particularly limited and can be selected in accordance with the purpose and application of the laminate sheet. In some embodiments, the substrate can have a thickness of 0.5 μm or greater. From the standpoint of the substrate's handling properties and so on, it is preferably 2 μm or greater, or possibly 5 μm or greater. The substrate's thickness can be, for instance, 200 μm or less. From the standpoint of thinning the PSA body and the ease of molding the laminate sheet, it is preferably 150 μm or less, more preferably 100 μm or less, possibly 50 μm or less, 25 μm or less, or even 10 μm or less. In the substrate-supported PSA body, the thickness of the PSA layer placed on each side of the substrate (the PSA layer thickness per each side of substrate) can be selected from the same range as for the thickness of the aforementioned substrate-free PSA body.

<Laminate sheet>

The method for producing the laminate sheet disclosed herein is not particularly limited. For instance, the laminate sheet can be obtained by applying the PSA composition to the release face of the second film and allowing it to cure (dry, crosslink, react, etc.) to form a PSA body (PSA layer), and layering the first film on the PSA body. The laminate sheet can also be obtained by applying the PSA composition to the first film and allowing it to cure (dry, crosslink, react, etc.) to form a PSA body and layering the release face of the second film on the PSA body. Alternatively, the laminate sheet can also be formed by allowing the PSA composition placed between the release faces of the first and second films to dry or cure to form a PSA body. The laminate sheet can also be prepared by allowing the PSA composition placed between the release faces of the second film and another release film (a process material) to dry or cure to form a PSA body, then removing the process material and laminating the exposed adhesive face with the first film. The PSA composition can be applied by various known methods. Specific examples include methods such as roll coating, kiss roll coating, gravure coating, reverse coating, roll brush coating, spray coating, dip roll coating, bar coating, knife coating, air knife coating, curtain coating, lip coating, and extrusion coating with a die coater.

The first film's thickness is not particularly limited. It can be selected in the range between, for instance, about 2 μm and 500 μm. From the standpoint of the ease of handling the first film in producing or using the laminate sheet, the first film's thickness is advantageously 5 μm or greater, preferably 10 μm or greater, or more preferably 25 μm or greater. From the standpoint of more favorably reducing the occurrence of optical distortion, in some embodiments, the first film's thickness is preferably 35 μm or greater, more preferably 40 μm or greater, possibly 45 μm or greater, 50 μm or greater, 60 μm or greater, or even 70 μm or greater. From the standpoint of preventing the laminate sheet from having a thickness greater than necessary, the first film's thickness is usually suitably 300 μm or less, preferably 250 μm or less, possibly 200 μm or less, 190 μm or less, 150 μm or less, 130 μm or less, 110 μm or less, 90 μm or less, or even 80 μm or less.

The second film's thickness is not particularly limited. It can be selected in the range between, for instance, about 2 μm and 500 μm. From the same standpoint as the first film, the second film's thickness is advantageously 5 μm or greater, preferably 10 μm or greater, or more preferably 25 μm or greater. In some embodiments, it is preferably 35 μm or greater, more preferably 40 μm or greater, possibly 45 μm or greater, 50 μm or greater, 60 μm or greater, or even 70 μm or greater. The second film's thickness is usually suitably 300 μm or less, preferably 250 μm or less, possibly 200 μm or less, 190 μm or less, 150 μm or less, 130 μm or less, or even 110 μm or less. In some embodiments, the second film may have a thickness of 90 μm or less, or even 80 μm or less.

(Peel strength)

In the laminate sheet disclosed herein, after hot-pressed at 120 °C for one minute, the second film's peel strength on PSA body (i.e., peel strength $P_{2A}$) is suitably less than 10 N/50mm, or preferably 5 N/50mm or less. In the laminate sheet with peel strength $P_{2A}$ of 5 N/50mm or less, even after the hot-pressing representing thermoforming of the laminate sheet, the second film is readily removed from the PSA body and thus the second film is efficiently removed from the PSA body. In some embodiments, peel strength $P_{2A}$ is preferably 3 N/50mm or less, more preferably 2 N/50mm or less, possibly 1.5 N/50mm or less, or even 1.0 N/50mm or less. Lowering of peel strength $P_{2A}$ is preferable also from the standpoint of avoiding events such as disruption of the shape of the PSA body's second face in association with removal of the second film from the PSA body, and lifting of the PSA body's first face from the first film or from the adherend to which the first face is adhered.

On the other hand, from the standpoint of inhibiting partial lifting of the second film from the adhesive face of the molded laminate film during thermoforming or with subsequent aging (e.g., while the molded laminate film is stored), it is advantageous that peel strength $P_{2A}$ is not too small. From such a standpoint, in some embodiments, peel strength $P_{2A}$ is suitably 0.05 N/50mm or greater (e.g., greater than 0.05 N/50mm), preferably 0.10 N/50mm or greater, possibly 0.15 N/50mm or greater, 0.30 N/50mm or greater, or even 0.50 N/50mm or greater.

When the first film of the laminate sheet disclosed herein is a release film, after hot-pressed at 120 °C for one minute, the first film's peel strength on PSA body (peel strength $P_{1A}$) can be, for instance, about 0.01 N/50mm to 3 N/50mm. In some embodiments, peel strength $P_{1A}$ is preferably lower than peel strength $P_{2A}$. In other words, after hot-pressing, the first film's peel strength on PSA body is preferably lower than the second film's peel strength on PSA body. For instance, the laminate sheet in such an embodiment can be used in an application where the first film is removed from the PSA body before the second film; and while the first film is being removed, lifting of the PSA body from the second film can be favorably inhibited. From the standpoint of surely inhibiting such an event, in some embodiments, the difference ($P_{2A}$-$P_{1A}$) between peel strength $P_{2A}$ (N/50mm) and peel strength $P_{1A}$ (N/50mm) is suitably 0.02 N/50mm or greater, preferably 0.05 N/50mm or greater, or possibly even 0.10 N/50mm or greater.

When the first film of the laminate sheet disclosed herein is a release film, in some embodiments, in assessing the laminate sheet in original state (i.e., before hot-pressed), the first film's peel strength on PSA body (peel strength $P_{1B}$) is preferably lower than the second film's peel strength on PSA body (peel strength $P_{2B}$). As for the laminate sheet in such an embodiment, for instance, in an application where the first film is removed from the PSA body before thermoforming (e.g., an application comprising laminating another release film or a non-releasable member to the adhesive face exposed upon removal of the first film), during removal of the first film, lifting of the PSA body from the second film can be favorably inhibited. From the standpoint of surely inhibiting such an event, in some embodiments, the difference ($P_{2B}$-$P_{1B}$) between peel strength $P_{2B}$ (N/50mm) and peel strength $P_{1B}$ (N/50mm) is suitably 0.02 N/50mm or greater, preferably 0.05 N/50mm or greater, or possibly even 0.10 N/50mm or greater. Favorable ranges of peel strength $P_{1B}$ and $P_{2B}$ can be comparable to the aforementioned peel strength $P_{1A}$ and $P_{2A}$, respectively.

The second film's post-hot-pressing peel strength $P_{2A}$ is determined by the method described later in Examples. The first film's post-hot-pressing peel strength $P_{1A}$ is also determined in the same manner. In determining peel strength $P_{2A}$ for the laminate sheet whose first film is a release film, the first film is removed first; the exposed adhesive face is laminated with a non-releasable resin film (e.g., about 50 μm thick PET film); and measurement can be taken after the laminate is hot-pressed at 120 °C for one minute. The original (initial) peel strength $P_{2B}$ and $P_{1B}$ are determined in the same manner as the post-hot-pressing peel strength $P_{2A}$ and $P_{1A}$ except that the laminate sheet being tested is not hot-pressed.

<Applications>

The laminate sheet disclosed herein is suitable for use in an application where after thermoformed, the release film is removed and the adhesive face is applied to an adherend. For instance, with such an advantage, the laminate sheet may be preferably used in applications where the PSA body in the laminate sheet (possibly a PSA body whose first face is fixed to the first film or the non-releasable surface of another member) is adhered to a non-flat surface (e.g., components of various portable devices) for purposes such as fixing, connecting, heat radiating, heat transferring, shaping, decorating, protecting, and supporting the components. Here, being portable means not just providing simple mobility, but further

providing a level of portability that allows an individual (average adult) to carry it relatively easily. Examples of the portable devices referred to herein include portable electronic devices such as mobile phones, smartphones, tablet PCs, notebook PCs, various wearable devices, digital cameras, digital video cameras, acoustic equipment (portable music players, IC recorders, etc.), computing devices (calculators, etc.), portable game devices, electronic dictionaries, electronic notebooks, electronic books, automotive information systems, portable radios, portable televisions, portable printers, portable scanners and portable modems as well as mechanical wristwatches and pocket watches, flashlights and hand mirrors. Examples of components of portable electronic devices may include optical films and display panels used in image display units such as liquid crystal displays and organic EL displays. The laminate sheet disclosed herein may be preferably used in applications where the PSA body in the laminate sheet is adhered to various components in automobiles and home electric appliances for purposes such as fixing, connecting, heat radiating, heat transferring, shaping, decorating, protecting, and supporting the components.

The laminate sheet disclosed herein can be preferably used in an application where at least a partial area of the laminate sheet is molded into a non-flat shape (3-dimentional shape) by pressing while heating; and then, the PSA body in the laminate sheet is applied to an adherend. The time from molding to application of the PSA body can be, for instance, one minute or more, 5 minutes or more, 30 minutes or more, 1 hour or more, 6 hours or more, or even 1 day or more. The maximum time from molding to PSA body application is not particularly limited. For instance, it can be 1 year or less, 6 months or less, etc. The heating temperature for molding the laminate sheet into a non-flat shape can be, for instance, 90 °C or higher, 100 °C or higher, 110 °C or higher, or 120 °C or higher. The heating temperature can be, for instance, 250 °C or lower, 220 °C or lower, 200 °C or lower, 180 °C or lower, or 160 °C or lower. The heating/pressing time can be, for instance, 0.5 second or more, 1 second or more, or 5 seconds or more and 30 minutes or less, 5 minutes or less, 60 seconds or less, or 40 seconds or less.

The claimed invention is as set out in the appended set of claims.

The matters disclosed in this description further include a method for processing a laminate sheet, the method comprising obtaining the laminate sheet described herein, and molding at least a partial area of the laminate sheet into a non-flat shape by pressing while heating. In the above processing method , the non-flat shape may comprise a curve shape that has a depression or protrusion on a first face of the laminate sheet as well as a protrusion or depression on a second face of the laminate sheet corresponding to the depression or protrusion on the first face, respectively.

The matters disclosed in this description further include a laminate sheet comprising an area molded into a non-flat shape, the laminate sheet processed by the above processing method.

The matters disclosed in this description further include a method for bonding a first adherend surface in a non-flat shape and a second adherend surface in a non-flat shape corresponding (complementary) to the first adherend surface, the method comprising: obtaining a laminate sheet molded into a suitable non-flat shape corresponding to the non-flat shape of the first adherend surface, wherein the laminate sheet comprises a sheet of a PSA body as well as first and second films as release films laminated on first and second faces of the PSA body, respectively, with the second film comprising a resin film and a release layer provided at least to the PSA body side surface of the resin film while having a Young's modulus at 85 °C of 500 MPa or greater and a Young's modulus at 120 °C of 500 MPa or less; removing the first film from the PSA body and adhering the PSA body's first face to the first adherend surface; and removing the second film and adhering the PSA body's second face to the second adherend surface. In the above bonding method , as the laminate sheet molded in the non-flat shape, a species obtained by molding a laminate sheet whose first film is a release film into the non-flat shape, may be used with the laminate sheet as described herein.

EXAMPLES

Several working examples related to the present invention are described below, but the present invention is not to be limited to these examples. In the description below, "part(s)" and "%" are by weight unless otherwise specified.

<Measurements and Evaluations>

(Young's modulus)

A film to be tested is cut into a dumbbell shape measuring 120 mm in total length and having a 10 mm wide parallel (square) portion to prepare a test piece. The test piece is set at a chuck distance of 30 mm in a tensile tester, and at 2 minutes after placed under the atmosphere at 85 °C or 120°C, tensile test is started at a tensile speed of 50 mm/min. From the resulting stress (vertical axis) vs strain (horizontal axis) curve, five points are selected in the marginally deformed segment (within 5 % strain); and from the slope of linear regression equation, the Young's modulus is determined.

(Elongation at break)

The elongation at break is determined from the result of the tensile test carried out under the atmosphere at 120 °C in the Young's modulus measurement.

(Appearance after release treatment)

When release treatment has caused notable deformation (shrinking, waving, etc.) or an external defect such as cloudiness to the resin film, it is graded "Poor"; when no external defect is observed, it is graded "Good."

(Molding test for laminate sheet)

As shown in Fig. 2 to Fig. 4, is obtained a metal mold 60 having a bottom mold 62 having a recessed area 622 and an upper mold 64 (not shown in Fig. 2) having a raised area 642. In Fig. 4, the left and right ends of raised area 642 are arc-shaped with 65 mm radius of curvature.

A laminate sheet to be tested is cut into a 100 mm wide 200 mm long rectangle to prepare a test piece 70. Test piece 70 is placed over bottom mold 62 in a way that the two ends of the length direction of test piece 70 protrude from the two ends of the length direction of recessed area 622 in bottom mold 62 while test piece 70 and recessed area 622 are centrally aligned across the width (see imaginary lines in Fig. 4). Upper mold 64 is lowered and hot-pressing is carried out at 120 °C for one minute. Metal mold 60 is allowed to cool to 40 °C. Subsequently, upper mold 64 is elevated to take out test piece 70.

The resulting molded sheet (molded test piece) is visually inspected and evaluated as follows: "Torn" when tearing has occurred in the second film and "Untorn" when no tearing is observed; "Peeled" when peeling or lifting has occurred at the test piece ends placed to protrude from the two ends of the length direction of recessed area 622 or in the areas molded along the arcs of raised area 642 and "Unpeeled" when no peeling or lifting is observed.

(Post-molding storage test)

The molded sheet (molded test piece) obtained in the molding test is stored in an environment at 23 °C and 50 % RH for 24 hours. Subsequently, the second film is inspected for the presence of peeling and lifting from the PSA body (PSA layer). Appearance retention is graded "Poor" when peeling or lifting is observed and "Good" when no peeling or lifting is observed.

(Second film's peel strength ($P_{2A}$))

A laminate sheet to be tested is placed between two flat metal plates heated to 120 °C and hot-pressed for one minute. After cooled to room temperature, it is cut into a 50 mm wide strip to prepare a test piece. In an environment at 23 °C and 50 %RH, the test piece is set in a tensile tester; and at a peel angle of 180° at a tensile speed of 300 mm/min, is determined the peel strength of the second film on the PSA body (PSA layer).

<Preparation of laminate sheets>

(Example 1)

Was obtained a silicone-based release agent S1 comprising 92 parts of vinyl group-containing silicone-based release agent (KS-3703 available from Shin-Etsu Chemical Co., Ltd.), 8 parts of release-controlling agent (KS-3800 available from Shin-Etsu Chemical Co., Ltd.) and 0.2 part of platinum catalyst (CAT-PL-50T available from Shin-Etsu Chemical Co., Ltd.) at a total concentration of 2.0 % in heptane (diluent solvent). To one face of 100 μm thick polyolefinic film POL-1 (Q16CK available from Toray Industries, Inc.), release agent S1 was applied using a Mayer bar #5, allowed to dry at 80 °C for 3 minutes and then aged for 72 hours in an environment at 40 °C. In this manner, was obtained release film R1 having a release layer formed from silicone-based release agent S2 on one face of polyolefinic film POL-1.

Using release film R1 as the second film, was prepared a laminate sheet with the first film (support film) laminated and fixed to the first face of PSA body formed of the PSA layer and the second film laminated to the PSA's first face. In particular, to the release-treated face of release film R1, was applied a UV-curable acrylic PSA composition, covered and blocked from air with release film R0 (Cerapeel TKA07(07) available from Toray Advanced Film Co., Ltd.), 75 μm thick transparent polyethylene terephthalate (PET) film whose one face had been treated with silicone-based release agent. By UV irradiation, the PSA composition was cured to form a 50 μm thick PSA layer. From the PSA layer, was removed release film R0. To the exposed adhesive face, was adhered 80 μm thick triacetyl cellulose (TAC) film (available from FUJIFILM

Corporation). In this manner, was obtained a laminate sheet having the TAC film (support film), PSA layer and release film R1 (second film) layered in this order.

(Example 2)

Was obtained a silicone-based release agent S2 comprising 88 parts of vinyl group-containing silicone-based release agent (KS-3703 available from Shin-Etsu Chemical Co., Ltd.), 12 parts of release-controlling agent (KS-3800 available from Shin-Etsu Chemical Co., Ltd.) and 0.2 part of platinum catalyst (CAT-PL-50T available from Shin-Etsu Chemical Co., Ltd.) at a total concentration of 2.0 % in heptane. To one face of 100 μm thick PET-based film PET-1 (QV22 available from Toray Industries, Inc.), release agent S2 was applied using a Mayer bar #5, allowed to dry at 80 °C for 3 minutes and then aged for 72 hours in an environment at 40 °C to obtain release film R2. Using release film R2 as the second film, but otherwise in the same manner as preparing the laminate sheet according to Example 1, was obtained a laminate sheet according to this Example.

It is noted that changing silicone-based release agent S2 used in preparing release film R2 to silicone-based release agent S5 comprising 100 parts of vinyl group-containing silicone-based release agent (KS-3703 available from Shin-Etsu Chemical Co., Ltd.) and 0.2 part of platinum catalyst (CAT-PL-50T available from Shin-Etsu Chemical Co., Ltd.) at a total concentration of 2.0 % in heptane, was prepared release film R8; using release film R8, but otherwise in the same manner as preparing the laminate sheet according to Example 2, was prepared a laminate sheet according to Reference Example 1; and the laminate sheet had a second film's peel strength of 0.05 N/50mm.

(Example 3)

Was obtained a silicone-based release agent S3 comprising 50 parts of vinyl group-containing silicone-based release agent (KS-3703 available from Shin-Etsu Chemical Co., Ltd.), 50 parts of release-controlling agent (KS-3800 available from Shin-Etsu Chemical Co., Ltd.) and 1.0 part of platinum catalyst (CAT-PL-50T available from Shin-Etsu Chemical Co., Ltd.) at a total concentration of 2.0 % in heptane. To one face of 50 μm thick PET-based film PET-2 (RS11 available from Toray Industries, Inc.), release agent S3 was applied using a Mayer bar #5, allowed to dry at 80 °C for 3 minutes and then aged for 72 hours in an environment at 40 °C to obtain release film R3. Using release film R3 as the second film, but otherwise in the same manner as preparing the laminate sheet according to Example 1, was obtained a laminate sheet according to this Example.

(Example 4)

Was obtained a silicone-based release agent S4 comprising 70 parts of vinyl group-containing silicone-based release agent (KS-3703 available from Shin-Etsu Chemical Co., Ltd.), 30 parts of release-controlling agent (KS-3800 available from Shin-Etsu Chemical Co., Ltd.) and 0.5 part of platinum catalyst (CAT-PL-50T available from Shin-Etsu Chemical Co., Ltd.) at a total concentration of 2.0 % in heptane. Using release agent S4 in place of release agent S3, but otherwise in the same manner as preparing release film R3, was obtained release film R4. Using release film R4 as the second film, but otherwise in the same manner as preparing the laminate sheet according to Example 1, was obtained a laminate sheet according to this Example.

(Example 5)/Reference Example

Using polyolefinic film POL-1 (no release treatment) as the second film, but otherwise in the same manner as preparing the laminate sheet according to Example 1, was obtained a laminate sheet according to this Example.

(Example 6)/Reference Example

To one face of 100 μm thick polyolefinic film POL-2 (Q01CK available from Toray Industries, Inc.), release agent S1 was applied using a Mayer bar #5, allowed to dry at 80 °C for 3 minutes and then aged for 72 hours in an environment at 40 °C to obtain release film R6. However, when heated to dry, the occurrence of notable wavy deformation was observed. Thus, release film R6 was not used to prepare a laminate sheet.

(Example 7)/Reference Example

To one face of 50 μm thick PET-based film PET-3 (LUMIRROR S10 available from Toray Industries, Inc.), release agent S2 was applied using a Mayer bar #5, allowed to dry at 80 °C for 3 minutes and then aged for 72 hours in an environment at 40 °C to obtain release film R7.

Using release film R7 as the second film, but otherwise in the same manner as preparing the laminate sheet according to Example 1, was obtained a laminate sheet according to this Example.

The laminate sheets according to the respective Examples were subjected to the measurements and evaluations described above. The results are shown in Table 1. In Table 1, "N.A." indicates that it was not tested. In the column of elongation at break. "> 800" indicates that in the tensile test, it did not break up to 800 % elongation.

[Table 1]

Table 1

| | | | Ex. 1 | Ex. 2 | Ex. 3 | Ex. 4 | Ex. 5 | Ex. 6 | Ex. 7 |
|---|---|---|---|---|---|---|---|---|---|
| 2nd Film Constitution | Resin film | Species | POL-1 | PET-1 | PET-2 | PET-2 | POL-1 | POL-2 | PET-3 |
| | | Thickness (μm) | 100 | 100 | 50 | 50 | 100 | 100 | 50 |
| | Release agent | Species | S1 | S2 | S3 | S4 | None | S1 | S2 |
| 2nd Film Evaluation | Young's modulus at 85 °C (Mpa) | | 1041 | 824 | 1392 | 1392 | 1041 | 358 | 2022 |
| | Appearance after release treatment | | Good | Good | Good | Good | N.A. | Poor | Good |
| | Young's modulus at 120 °C (Mpa) | | 5 | 189 | 385 | 385 | 5 | 1 | 819 |
| | Elongation at break at 120 °C (%) | | > 800 | 330 | 340 | 340 | > 800 | > 800 | 220 |
| Laminate sheet Evaluation | Molding test at 120 °C | Tearing | Untom | Untorn | Untorn | Untorn | Untorn | N.A. | Torn |
| | | Peeling | Unpeeled | Unpeeled | Unpeeled | Unpeeled | Unpeeled | N.A. | Peeled |
| | Storage test | Appearance retention | Good | Good | Good | Good | Good | N.A. | Poor |
| | 2nd film's peel strength (N/50mm) (after hot-pressed at 120 °C for 1 min) | | 0.15 | 0.30 | 1.5 | 0.80 | 10 | N.A. | 0.25 |

As shown in Table 1, with respect to the laminate sheets of Examples 1 to 4, all showed good thermoformability in the molding test while the second film (release film) was inhibited from lifting and peeling during post-molding storage. On the other hand, in Example 7 with second film having too high a Young's modulus, tearing and peeling occured when molded; and Example 5 using the release-layer-free second film showed insufficient removability from the PSA layer. With respect to Example 6 where the resin film subjected to release treatment had a low Young's modulus at 85 °C, appearance defection occurred during the release treatment of the resin film.

## Claims

**1.** A laminate sheet comprising a sheet of a pressure-sensitive adhesive body, a first film laminated on a first face of the pressure-sensitive adhesive body, and a second film laminated on a second face of the pressure-sensitive adhesive body, wherein
the second film comprises a resin film and a release layer provided at least to the pressure-sensitive adhesive body side surface of the resin film while satisfying the following conditions:

having a Young's modulus at 85 °C of 500 MPa or greater; and
having a Young's modulus at 120 °C of 500 MPa or less, wherein
the release layer is formed from a solvent-based thermally curable addition-reaction-type silicone release agent,
a pressure-sensitive adhesive in the pressure-sensitive adhesive body comprises an acrylic pressure-sensitive adhesive, and
the Young's modulus at 85 °C and 120 °C is measured in accordance with the measurement method disclosed in the description.

**2.** The laminate sheet according to Claim 1, wherein after hot-pressed at 120 °C for one minute, the second film has a peel strength of 0.10 N/50mm or greater and 5 N/50mm or less on the pressure-sensitive adhesive body, wherein the peel strength is measured in accordance with the measurement method disclosed in the description.

**3.** The laminate sheet according to Claim lor 2, wherein the first film is a support film fixed to the first face of the pressure-sensitive adhesive body.

**4.** The laminate sheet according to Claim 1or 2, wherein the first film is a release film.

**5.** The laminate sheet according to Claim 4, wherein the first film has a peel strength on the pressure-sensitive adhesive body lower than the second film's peel strength on the pressure-sensitive adhesive body.

**6.** The laminate sheet according to any one of Claims 1 to 5, wherein the pressure-sensitive adhesive body is a pressure-sensitive adhesive layer formed of pressure-sensitive adhesive.

**7.** A release film comprising a resin film and a release layer provided at least to one face of the resin film while satisfying the following conditions:

having a Young's modulus at 85 °C of 500 MPa or greater; and
having a Young's modulus at 120 °C of 500 MPa or less, wherein
the release layer is formed from a solvent-based thermally curable addition-reaction-type silicone release agent and
the Young's modulus at 85 °C and 120 °C is measured in accordance with the measurement method disclosed in the description.

**8.** A method for processing a laminate sheet, the method comprising

obtaining the laminate sheet according to any one of Claims 1 to 6, and
molding at least a partial area of the laminate sheet into a non-flat shape by pressing while heating.

## Patentansprüche

**1.** Laminatfolie, umfassend eine Folie eines druckempfindlichen Klebstoffkörpers, einen ersten Film, der auf eine erste

Seite des druckempfindlichen Klebstoffkörpers laminiert ist, und einen zweiten Film, der auf eine zweite Seite des druckempfindlichen Klebstoffkörpers laminiert ist, wobei
der zweite Film ein Harfilm und eine mindestens auf der dem druckempfindlichen Klebstoffkörper zugewandten Seite des Harzfilms vorgesehene Trennschicht umfasst, die dabei die folgenden Bedingungen erfüllt:

aufweisend einen Elastizitätsmodul bei 85 °C von 500 MPa oder größer; und
aufweisend einen Elastizitätsmodul bei 120 °C von 500 MPa oder weniger, wobei
die Trennschicht aus einem lösungsmittelbasierten, thermisch härtbaren Silikon-Trennmittel vom Additionsreaktionstyp gebildet ist,
ein druckempfindlicher Klebstoff im druckempfindlichen Klebstoffkörper einen druckempfindlichen Acryl-Klebstoff umfasst und
der Elastizitätsmodul bei 85 °C und 120 °C gemäß dem in der Beschreibung offenbarten Messverfahren gemessen wird.

**2.** Laminatfolie nach Anspruch 1, wobei die zweite Schicht nach einem Heißpressen bei 120 °C für eine Minute eine Schälfestigkeit von 0,10 N/50 mm oder größer und 5 N/50 mm oder weniger auf dem druckempfindlichen Klebstoffkörper aufweist, wobei die Schälfestigkeit gemäß dem in der Beschreibung offenbarten Messverfahren gemessen wird.

**3.** Laminatfolie nach Anspruch 1 oder 2, wobei der erste Film ein Trägerfilm ist, der an der ersten Seite des druckempfindlichen Klebstoffkörpers befestigt ist.

**4.** Laminatfolie nach Anspruch 1 oder 2, wobei der erste Film ein Trennfilm ist.

**5.** Laminatfolie nach Anspruch 4, wobei der erste Film eine geringere Schälfestigkeit auf dem druckempfindlichen Klebstoffkörper aufweist als der zweite Film auf dem druckempfindlichen Klebstoffkörper.

**6.** Laminatfolie nach einem der Ansprüche 1 bis 5, wobei der druckempfindliche Klebstoffkörper eine aus druckempfindlichem Klebstoff gebildete druckempfindliche Klebeschicht ist.

**7.** Trennfilm, umfassend einen Harzfilm und eine mindestens auf einer Seite der Harzschicht vorgesehene Trennschicht, die dabei die folgenden Bedingungen erfüllt:

aufweisend einen Elastizitätsmodul bei 85 °C von 500 MPa oder größer; und
aufweisend einen Elastizitätsmodul bei 120 °C von 500 MPa oder weniger, wobei
die Trennschicht aus einem lösungsmittelbasierten, thermisch härtbaren Silikon-Trennmittel vom Additionsreaktionstyp gebildet ist und
der Elastizitätsmodul bei 85 °C und 120 °C gemäß dem in der Beschreibung offenbarten Messverfahren gemessen wird.

**8.** Verfahren zum Verarbeiten einer Laminatfolie, wobei das Verfahren umfasst:

Erhalten der Laminatfolie nach einem der Ansprüche 1 bis 6 und
Formen mindestens eines Teilbereichs der Laminatfolie in eine nicht flache Form durch Pressen unter Erwärmung.

## Revendications

**1.** Feuille stratifiée comprenant une feuille d'un corps d'adhésif sensible à la pression, un premier film stratifié sur une première face du corps d'adhésif sensible à la pression et un second film stratifié sur une seconde face du corps d'adhésif sensible à la pression, dans laquelle
le second film comprend un film de résine et une couche de libération prévue au moins sur la surface latérale de corps d'adhésif sensible à la pression du film de résine tout en satisfaisant les conditions suivantes :

avoir un module de Young à 85 °C de 500 MPa ou supérieur ; et
avoir un module de Young à 120 °C de 500 MPa ou moins, dans laquelle
la couche de libération est formée d'un agent de libération en silicone de type à réaction d'addition, durcissable

thermiquement, à base de solvant,
un adhésif sensible à la pression dans le corps d'adhésif sensible à la pression comprend un adhésif acrylique sensible à la pression, et
le module de Young à 85 °C et 120 °C est mesuré conformément au procédé de mesure divulgué dans la description.

**2.** Feuille stratifiée selon la revendication 1, dans laquelle après pressage à chaud à 120 °C pendant une minute, le second film a une résistance au pelage de 0,10 N/50 mm ou supérieure et 5 N/50 mm ou moins sur le corps d'adhésif sensible à la pression, dans laquelle la résistance au pelage est mesurée conformément au procédé de mesure divulgué dans la description.

**3.** Feuille stratifiée selon la revendication 1 ou 2, dans laquelle le premier film est un film de support fixé à la première face du corps d'adhésif sensible à la pression.

**4.** Feuille stratifiée selon la revendication 1 ou 2, dans laquelle le premier film est un film de libération.

**5.** Feuille stratifiée selon la revendication 4, dans laquelle le premier film a une résistance au pelage sur le corps d'adhésif sensible à la pression inférieure à la résistance au pelage du second film sur le corps d'adhésif sensible à la pression.

**6.** Feuille stratifiée selon l'une quelconque des revendications 1 à 5, dans laquelle le corps d'adhésif sensible à la pression est une couche d'adhésif sensible à la pression formée d'adhésif sensible à la pression.

**7.** Film de libération comprenant un film de résine et une couche de libération prévue au moins sur une face du film de résine tout en satisfaisant les conditions suivantes :

avoir un module de Young à 85 °C de 500 MPa ou supérieur ; et
avoir un module de Young à 120 °C de 500 MPa ou moins, dans lequel
la couche de libération est formée d'un agent de libération en silicone de type à réaction d'addition, durcissable thermiquement, à base de solvant, et
le module de Young à 85 °C et 120 °C est mesuré conformément au procédé de mesure divulgué dans la description.

**8.** Procédé d'usinage d'une feuille stratifiée, le procédé comprenant
obtenir la feuille stratifiée selon l'une quelconque des revendications 1 à 6, et mouler au moins une zone partielle de la feuille stratifiée en une forme non plate en pressant tout en chauffant.

[Fig. 1]

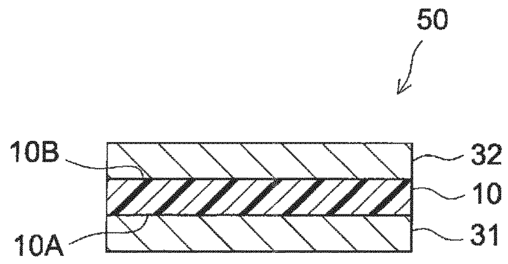
50
10B
32
10
10A
31

[Fig. 2]

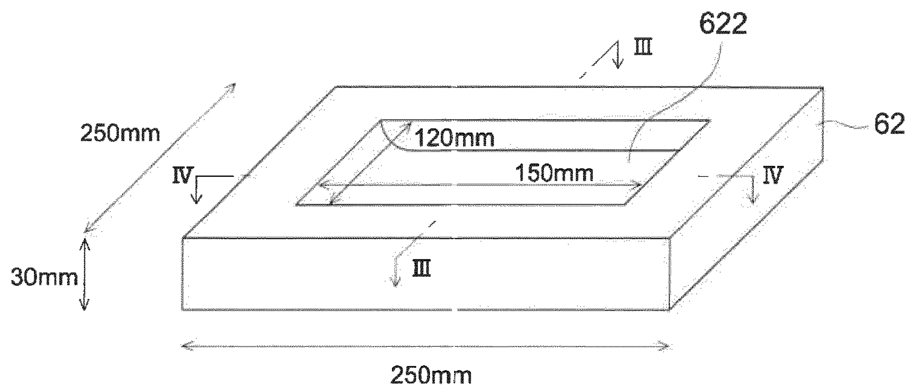
622
III
250mm
62
120mm
IV
150mm
IV
30mm
III
250mm

1/2

[Fig. 3]

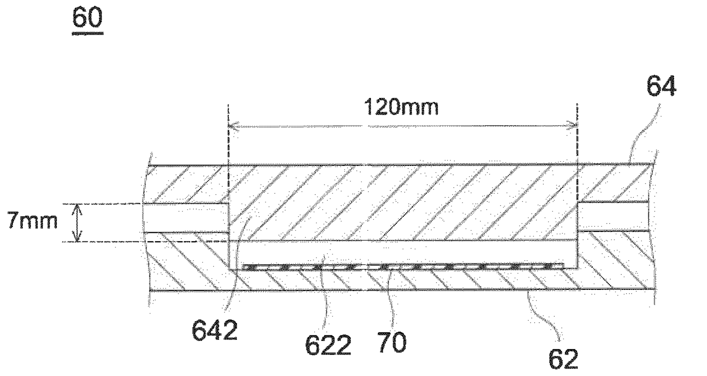


[Fig. 4]

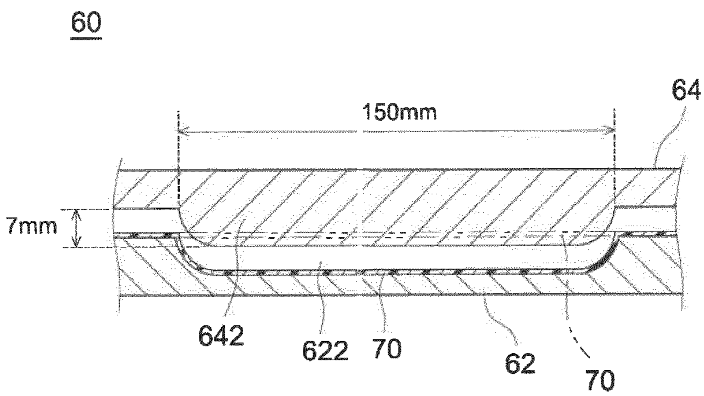


2/2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016029139 A
- EP 3521395 A
- JP 2007051271 A


### Non-patent literature cited in the description


- **C. A. DAHLQUIST**. Adhesion : Fundamental and Practice. McLaren & Sons, 1966, 143
- Polymer Handbook. John Wiley & Sons, Inc., 1989